(19) Europäisches Patentamt
European Patent Office
Office européen des brevets

(11) EP 3 778 191 A1

(12) EUROPEAN PATENT APPLICATION
published in accordance with Art. 153(4) EPC

(43) Date of publication:
17.02.2021 Bulletin 2021/07

(51) Int Cl.:
B29C 64/153 (2017.01)        B33Y 10/00 (2015.01)
B33Y 80/00 (2015.01)

(21) Application number: 19774657.1

(22) Date of filing: 27.03.2019

(86) International application number:
PCT/JP2019/013161

(87) International publication number:
WO 2019/189347 (03.10.2019 Gazette 2019/40)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(30) Priority: 30.03.2018 JP 2018066722

(71) Applicant: Aspect Inc.
Inagi-shi, Tokyo 206-0803 (JP)

(72) Inventors:
• HAGIWARA Masashi
  Inagi-shi, Tokyo 206-0803 (JP)
• KIMURA Yusei
  JP/Inagi-shi, Tokyo 206-0803 (JP)

(74) Representative: SSM Sandmair
Patentanwälte Rechtsanwalt
Partnerschaft mbB
Joseph-Wild-Straße 20
81829 München (DE)

(54) **POWDER BED FUSED MOLDED OBJECT AND METHOD FOR PRODUCING SAME**

(57) Provided are a powder bed fusion model having improved model strength and a method of fabricating the same. A step of applying a laser beam to a layer of a resin powder (8) includes: applying the laser beam with a first energy to a modeling area $(ma_i)$ in the first layer of the resin powder from the bottom among n layers of the resin powder; in the modeling area $(ma_2, ma_3, ma_{n-2}, ma_{n-1})$ in each of the second to (n - 1)-th layers of the resin powder, applying the laser beam with the first energy to a projecting portion $(PA_2, PA_3, PA_{n-1})$ projecting outward from at least one of the modeling areas in the vertically adjacent layers of the resin powder and to an overlapping portion $(OA_2, OA_3, OA_{n-1})$ overlapping the modeling areas in the adjacent layers of the resin powder, lying on the inner side of the projecting portion, and having at least a width equal to the thickness of a layer of the resin powder, and applying the laser beam with a second energy lower than the first energy to a center portion on the inner side of the projecting portion and the overlapping portion; and applying the laser beam with the first energy to the modeling area $(ma_n)$ in the n-th layer of the resin powder.

Fig.19

**Description**

[Technical Field]

The present invention relates to a powder bed fusion model and a method of fabricating the same.

[Background Art]

In recent years, there has been an increasing demand for modeling apparatuses for modeling prototype parts for functionality tests, parts to be used in high-mix low-volume products, and so on.
Such modeling apparatuses include stereolithography apparatuses, powder bed fusion apparatuses, and the like.
In a powder bed fusion apparatus among these modeling apparatuses, a powder material is stored in storage containers. This powder material is carried from a storage container to a fabrication container by means of a recoater to form a thin layer of the powder material on a modeling table inside the fabrication container. Then, a laser beam is applied to a predetermined area in this thin layer of the powder material to fuse the powder material at this area, and the powder material is solidified to form a solidified layer.
Such formation of a thin layer of the powder material and formation of a solidified layer in this thin layer are repeated to laminate solidified layers on the modeling table. As a result, a three-dimensional model is fabricated.
Powder materials used in model fabrication include resin powder, metal powder, ceramic powder, and mixed powder of these.

[Citation List]

[Patent Literature]

Patent Literature 1: International Publication No. 2015/145844
Patent Literature 2: Published Japanese Translation of PCT International Application No. Hei 8-504139

[Summary of Invention]

[Technical Problem]

When a model is fabricated with a powder bed fusion apparatus by using a resin powder, the model can be fabricated in a shorter time than the model fabricated with an injection molding apparatus by using the same type of resin, since no mold needs to be fabricated. However, the model has lower strength since pressure has not been applied at the time of manufacturing.
In view of the above, it is an object to improve the strength of a powder bed fusion model and the strength of the model in a method of fabricating the same.

[Solution to Problem]

One aspect of the technique disclosed herein provides a powder bed fusion model in which n (n is an integer of 3 or more) resin solidified layers are laminated, wherein among the n solidified layers, the first solidified layer from a bottom has been fused and solidified with a first energy, in each of the second to (n - 1)-th solidified layers, a projecting portion projecting outward from at least one of the vertically adjacent solidified layers, and an overlapping portion overlapping the adjacent solidified layers, lying on an inner side of the projecting portion, and having at least a width equal to a thickness of the solidified layer have been fused and solidified with the first energy, and a center portion on an inner side of the projecting portion and the overlapping portion has been fused and solidified with a second energy lower than the first energy, and the n-th solidified layer has been fused and solidified with the first energy.
Another aspect of the technique disclosed herein provides a powder bed fusion model fabrication method of fabricating a model by repeating a step of forming a layer of resin powder and, after the formation of the layer of the resin powder, a step of applying a laser beam to a modeling area in the layer of the resin powder to fuse the resin powder at the modeling area and solidifying the resin powder to form a solidified layer, to thereby form n (n is an integer of 3 or more) layers of the resin powder and laminate n solidified layers in the n layers of the resin powder, wherein the step of applying a laser beam to a layer of the resin powder includes: applying the laser beam with a first energy to the modeling area in the first layer of the resin powder from a bottom among the n layers of the resin powder; in the modeling area in each of the second to (n - 1)-th layers of the resin powder, applying the laser beam with the first energy to a projecting portion projecting outward from at least one of the modeling areas in the vertically adjacent layers of the resin powder and to an overlapping portion overlapping the modeling areas in the adjacent layers of the resin powder, lying on an inner side of the projecting portion, and having at least a width equal to a thickness of the layer of the resin powder and applying the laser beam with a second energy lower than the first energy to a center portion on an inner side of the projecting portion and the overlapping portion; and applying the laser beam with the first energy to the modeling area in the n-th layer of the resin powder.

[Advantageous Effects of Invention]

According to one aspect of the technique disclosed herein, a laser beam is applied with a first energy to a modeling area in the first layer of a resin powder from the bottom among n layers of the resin powder. In the modeling area in each of the second to (n - 1)-th layers of the resin powder, the laser beam is applied with the first energy to a projecting portion projecting outward from at least one of the modeling areas in the vertically adjacent layers of the resin powder and to an overlapping portion overlapping the modeling areas in the adjacent layers of the resin powder, lying on the inner side of the projecting portion, and having at least a width equal to the thickness of a layer of the resin powder and the laser beam is applied with a second energy lower than the first energy to a center portion on the inner side of the projecting portion and the overlapping portion. The laser beam is applied with the first energy to the modeling area in the n-th layer of the resin powder.

In this way, the resin powder at the modeling area in the first layer of the resin powder, the projecting portion and the overlapping portion of each of the modeling areas in the second to (n - 1)-th layers of the resin powder, and the modeling area in the n-th layer of the resin powder can be strongly fused.

Thus, the number of open pores formed in the atmospherically exposed surfaces of the first solidified layer, the portion of the atmospherically exposed surface of each of the second to (n - 1)-th solidified layers at the projecting portion, and the atmospherically exposed surfaces of the n-th solidified layer, i.e., the entire surfaces of the powder bed fusion model, can be less than the number of open pores formed in a case where a laser beam is applied with the second energy to the entire modeling areas in the n layers of the resin powder.

Further, the overlapping portions can serve as margins for the projecting portions and suppress formation of open pores at the portion of a surface of each of the second to (n - 1)-th solidified layers that may be exposed to the atmosphere at the end of the projecting portion on the center portion side.

These make it possible to prevent the model from easily breaking from open pores when a stress is applied to the model due to concentration of the stress at these open pores, and thus improve the toughness (strength) of the model.

[Brief Description of Drawings]

[FIG. 1] FIG. 1 is a cross-sectional view illustrating an example of the structure of a model fabricated by a powder bed fusion apparatus by using resin powder.
[FIG. 2] FIG. 2 is a diagram explaining an example of the configuration of a powder bed fusion apparatus according to an embodiment.
[FIGS. 3A and 3B] FIG. 3A is a top view illustrating the configuration of the powder bed fusion apparatus excluding its housing, and FIG. 3B is a cross-sectional view along I-I line in FIG. 3A.
[FIG. 4] FIG. 4 is a block diagram explaining the configuration of a laser beam emission unit.
[FIG. 5] FIG. 5 is a diagram explaining an example of the configuration of slice data of the first layer (lowermost layer) of a model to be fabricated from the bottom in a case where the model is divided into four layers.
[FIG. 6] FIG. 6 is a diagram explaining an example of the configuration of slice data of the second layer (intermediate layer) of the model to be fabricated from the bottom in the case where the model is divided into four layers.
[FIG. 7] FIG. 7 is a diagram explaining an example of the configuration of slice data of the third layer (intermediate layer) of the model to be fabricated from the bottom in the case where the model is divided into four layers.
[FIG. 8] FIG. 8 is a diagram explaining an example of the configuration of slice data of the fourth layer (uppermost layer) of the model to be fabricated from the bottom in the case where the model is divided into four layers.
[FIGS. 9A and 9B] FIGS. 9A and 9B are diagrams explaining a zigzag scanning method as an example laser beam scanning method.
[FIGS. 10A and 10B] FIGS. 10A and 10B are cross-sectional views of a buffer layer of a powder material in the process of being formed (part 1).
[FIGS. 11A and 11B] FIGS. 11A and 11B are cross-sectional views of the buffer layer of the powder material in the process of being formed (part 2).

[FIGS. 12A and 12B] FIGS. 12A and 12B are cross-sectional views of the buffer layer of the powder material in the process of being formed (part 3).

[FIG. 13] FIG. 13 is a cross-sectional view of the buffer layer of the powder material in the process of being formed (part 4).

[FIGS. 14A and 14B] FIGS. 14A and 14B are cross-sectional views of a model in the process of being fabricated (part 1).

[FIGS. 15A and 15B] FIGS. 15A and 15B are cross-sectional views of the model in the process of being fabricated (part 2).

[FIGS. 16A and 16B] FIGS. 16A and 16B are cross-sectional views of the model in the process of being fabricated (part 3).

[FIGS. 17A and 17B] FIGS. 17A and 17B are cross-sectional views of the model in the process of being fabricated (part 4).

[FIG. 18] FIG. 18 is a cross-sectional view of the model in the process of being fabricated (part 5).

[FIG. 19] FIG. 19 is a flowchart explaining a method implemented by a control unit at the time of fabricating a model to adjust the energy density of the laser beam to be applied to the modeling areas in n (n is an integer of 3 or more) thin layers of the powder material (part 1).

[FIG. 20] FIG. 20 is a flowchart explaining the method implemented by the control unit at the time of fabricating a model to adjust the energy density of the laser beam to be applied to the modeling areas in the n (n is an integer of 3 or more) thin layers of the powder material (part 2).

[FIGS. 21A and 21B] FIG. 21A is a top view illustrating the configuration of the first solidified layer from the bottom as the lowermost layer, and FIG. 21B is a cross-sectional view along II-II line in FIG. 21A.

[FIG. 22] FIG. 22 is a diagram explaining the configuration of the slice data of the second layer as an example intermediate layer in a state where the slice data of the first layer directly under the second layer and the slice data of the third layer directly on the second layer are superimposed on the slice data of the second layer.

[FIG. 23] FIG. 23 is a diagram explaining the configuration of the slice data of the third layer as another example intermediate layer in a state where the slice data of the second layer directly under the third layer and the slice data of the fourth layer directly on the third layer are superimposed on the slice data of the third layer.

[FIG. 24] FIG. 24 is a diagram explaining the configuration of the slice data of the (n - 1)-th layer as an example intermediate layer with projecting portions covering part of its outer peripheral portion, in a state where the slice data of the (n - 2)-th layer directly under the (n - 1)-th layer and the slice data of the n-th layer directly on the (n - 1)-th layer are superimposed on the slice data of the (n - 1)-th layer.

[FIGS. 25A and 25B] FIG. 25A is a top view illustrating the configuration of the second solidified layer as an example intermediate layer, and FIG. 25B is a cross-sectional view along III-III line in FIG. 25A.

[FIGS. 26A and 26B] FIG. 26A is a top view illustrating the configuration of the third solidified layer as another example intermediate layer, and FIG. 26B is a cross-sectional view along IV-IV line in FIG. 26A.

[FIGS. 27A to 27C] FIG. 27A is a top view illustrating the configuration of the (n - 1)-th solidified layer as an example intermediate layer with projecting portions covering part of its outer peripheral portion, FIG. 27B is a cross-sectional view along V-V line in FIG. 27A, and FIG. 27C is a cross-sectional view along VI-VI line in FIG. 27A.

[FIGS. 28A and 28B] FIG. 28A is a top view illustrating the configuration of the fourth solidified layer as the uppermost layer, and FIG. 28B is a cross-sectional view along VII-VII line in FIG. 28A.

[FIG. 29] FIG. 29 is a diagram illustrating a cross-sectional structure of the powder bed fusion model according to the embodiment along the height direction.

[FIG. 30] FIG. 30 is a diagram explaining the configuration of the slice data of the (n - 1)-th layer as an example intermediate layer without a projecting portion in its modeling area in a state where the slice data of the (n - 2)-th layer directly under the (n - 1)-th layer and the slice data of the n-th layer directly on the (n - 1)-th layer are superimposed on the slice data of the (n - 1)-th layer.

[FIG. 31] FIG. 31 is a diagram explaining the configuration of the slice data of the (n - 1)-th layer as another example intermediate layer without a projecting portion in its modeling area in a state where the slice data of the (n - 2)-th layer directly under the (n - 1)-th layer and the slice data of the n-th layer directly on the (n - 1)-th layer are superimposed on the slice data of the (n - 1)-th layer.

[FIGS. 32A and 32B] FIG. 32A is a top view illustrating an example of the configuration of the (n - 1)-th solidified layer as an example intermediate layer without a projecting portion in its modeling area, and FIG. 32B is a cross-sectional view along VIII-VIII line in FIG. 32A.

[FIGS. 33A and 33B] FIG. 33A is a top view illustrating the configuration of the (n - 1)-th solidified layer as another example intermediate layer without a projecting portion in its modeling area, and FIG. 33B is a cross-sectional view along IX-IX line in FIG. 33A.

[FIG. 34] FIG. 34 is a diagram illustrating a cross-sectional structure of a powder bed fusion model according to a comparative example along the height direction.

[Description of Embodiments]

Prior to the description of embodiments, matters considered by the inventor of the present application will be described.

One of the properties indicating the strength of a model is, for example, toughness, which represents tenacity. A model easily breaks if this toughness is low.

The inventor of the present application has examined the cause of the low toughness of a model fabricated with a powder bed fusion apparatus by using resin powder, and found that the cause is the pores formed on and in the model.

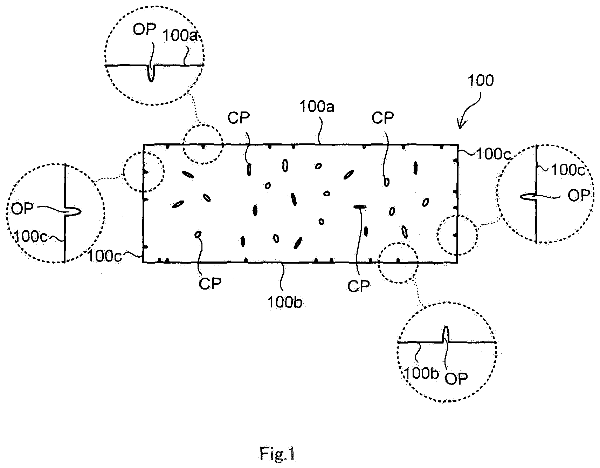

FIG. 1 is a cross-sectional view illustrating an example of the structure of a model fabricated by a powder bed fusion apparatus by using resin powder.

As illustrated in FIG. 1, pores are sometimes formed on and in a model fabricated with a powder bed fusion apparatus by using resin powder. Such pores include open pores OP being open spaces formed in the surfaces of a model 100 (an upper surface 100a, a lower surface 100b, and side surfaces 100c) and closed pores CP being closed spaces formed inside the model 100.

If, for example, open pores OP are formed in the surfaces 100a to 100c of the model 100, it is assumable that when a stress is applied to the model 100, the stress is concentrated at open pores OP and the model 100 easily breaks from those open pores OP.

In light of such a consideration, in the present embodiments, the toughness (strength) of a model is improved by suppressing formation of open pores in the surfaces of the model as below.

(First Embodiment)

A powder bed fusion model according to the present embodiment will be described along with a method of and an apparatus for fabricating the same.

First, the configuration of a powder bed fusion apparatus as the model fabrication apparatus will be described.

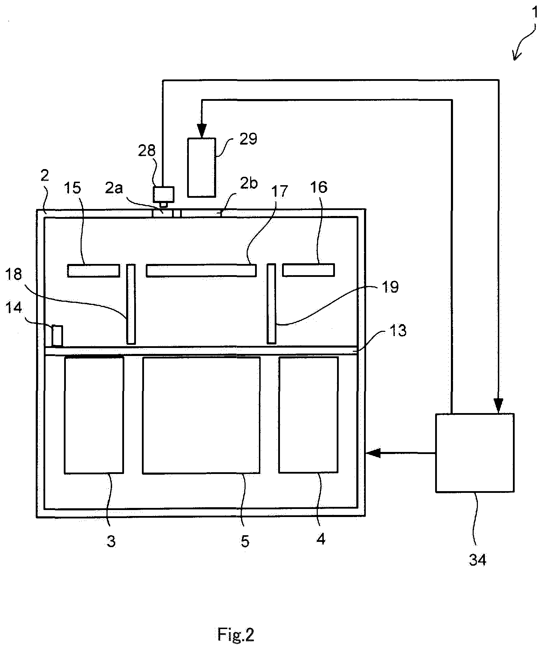

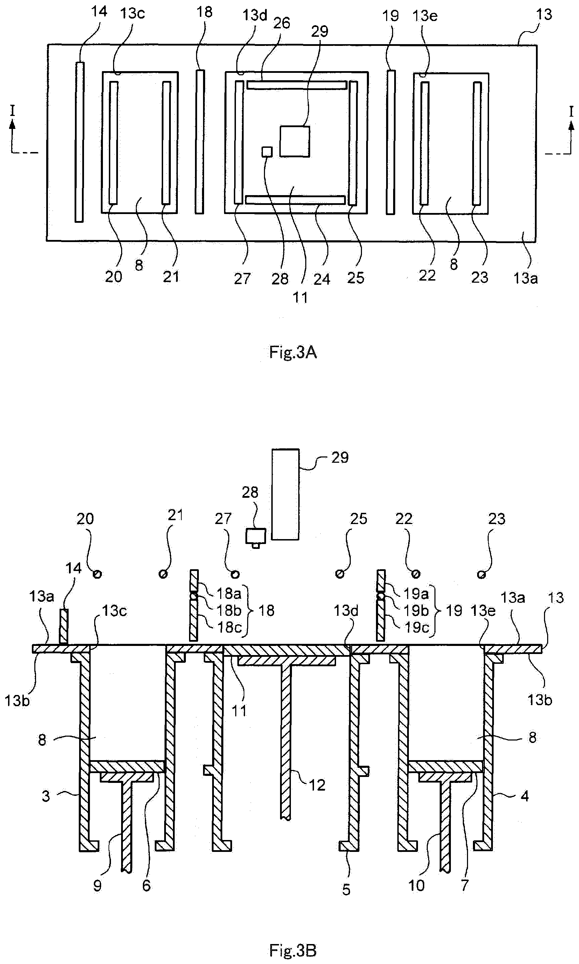

FIG. 2 is a diagram explaining an example of the configuration of the powder bed fusion apparatus. Also, FIG. 3A is a top view illustrating the configuration of the powder bed fusion apparatus excluding its housing, and FIG. 3B is a cross-sectional view along I-I line in FIG. 3A.

As illustrated in FIG. 2, a powder bed fusion apparatus 1 houses, in its housing 2, two storage containers 3 and 4 which store a powder material, and a fabrication container 5 where a model is fabricated using the powder material in the storage containers 3 and 4.

The type of that powder material is not particularly limited. For example, thermoplastic resin powders of polyphenylene sulfide (PPS), polybutylene terephthalate (PBT), polyamides (PA) such as nylon 6, nylon 11, and nylon 12 (nylon is a registered trademark), polypropylene (PP), elastomers (EL), and the like are usable as the powder material.

As illustrated in FIGS. 3A and 3B, among these containers 3 to 5, the storage containers 3 and 4 are, for example, tubular containers formed by performing processes such as bending and welding on a steel plate and having a rectangular opening when viewed from above.

Supply tables 6 and 7 are disposed inside the storage containers 3 and 4, respectively. A powder material 8 is supplied onto those supply tables 6 and 7 from outside. Also, support rods 9 and 10 connected to drivers not illustrated are attached to the lower surfaces of the supply tables 6 and 7. As the support rods 9 and 10 is driven by these drivers, the supply tables 6 and 7 are raised or lowered inside the storage containers 3 and 4 via the support rods 9 and 10.

On the other hand, the fabrication container 5 is, for example, a tubular container formed by performing processes such as bending and welding on a steel plate and having a square opening when viewed from above.

A modeling table 11 is disposed inside the fabrication container 5. The powder material 8 in the storage containers 3 and 4 is supplied onto the fabrication table 11. Also, a support rod 12 connected to a driver not illustrated is attached to the lower surface of the fabrication table 11. As the support rods 9 and 10 are driven by this driver, the fabrication table 11 is raised or lowered inside the fabrication container 5 via the support rod 12.

A carrying plate 13 is installed on the storage containers 3 and 4 and the fabrication container 5. A recoater 14 is provided on the carrying plate 13.

The carrying plate 13 is a flat steel with a flat upper surface 13a and a flat lower surface 13b and is provided with three through-holes 13c to 13e.

Among these through-holes 13c to 13e, the through-hole 13c and the through-hole 13e on the left side and the right side in FIGS. 3A and 3B have the same shapes and sizes as the openings on the upper sides of the storage containers 3 and 4. Also, the through-hole 13d in the center has the same shape and size as the opening on the upper side of the fabrication container 5.

Thus, when the storage container 3 is disposed under the through-hole 13c, the fabrication container 5 is disposed under the through-hole 13d, and the storage container 4 is disposed under the through-hole 13e, the through-hole 13c, the through-hole 13d, and the through-hole 13e communicate with the upper opening of the storage container 3, the upper opening of the fabrication container 5, and the upper opening of the storage container 4, respectively.

Meanwhile, the recoater 14 is a narrow metal plate placed upright in a direction perpendicular to the upper surface 13a of the carrying plate 13, and is connected to a driver not illustrated. As the recoater 14 is driven by this driver, the recoater 14 is moved leftward or rightward on the upper surface 13a of the carrying plate 13.

The powder bed fusion apparatus 1 raises or lowers the supply tables 6 and 7 and the modeling table 11 and moves the recoater 14 leftward or rightward. As a result, the powder material 8 in the storage container 3 or the storage container 4 is carried over the upper surface 13a of the carrying plate 13 into the fabrication container 5 through the through-holes 13c to 13e of the carrying plate 13. The powder material 8 in the storage containers 3 and 4 is supplied to the fabrication container 5 in this manner.

Thus, the storage containers 3 and 4, the supply tables 6 and 7, the carrying plate 13, and the recoater 14 can be said to constitute a unit that supplies the powder material 8 (resin material supply unit).

As illustrated in FIG. 2, upper heating units 15 to 17 and reflection plates 18 and 19 are provided in the space above the carrying plate 13 inside the housing 2.

As illustrated in FIGS. 3A and 3B, among the upper heating units 15 to 17, the upper heating unit 15 is disposed above the storage container 3 and includes two rod-shaped heaters 20 and 21. Also, the upper heating unit 16 is disposed above the storage container 4 and includes two rod-shaped heaters 22 and 23.

These heaters 20 to 23 are infrared heaters or electric resistance heaters and disposed inside the longitudinal sides of the storage containers 3 and 4 so as to be parallel to these sides, respectively, when viewed from above. The heaters 20 to 23 heat the powder material 8 in the storage containers 3 and 4 from above.

The upper heating unit 17, on the other hand, is disposed above the fabrication container 5 and includes four rod-shaped heaters 24 to 27.

These heaters 24 to 27 are infrared heaters or electric resistance heaters and disposed inside all sides of the fabrication container 5 so as to be parallel to these sides, respectively, when viewed from above. These heat the powder material 8 in the fabrication container 5 from above.

Also, the reflection plates 18 and 19 are metal plates attached to support columns inside the housing 2 not illustrated and oriented upright in the direction perpendicular to the upper surface 13a of the carrying plate 13, and are disposed between the storage container 3 and the fabrication container 5 and between the fabrication container 5 and the storage container 4.

Meanwhile, the reflection plate 18 on the left side in FIGS. 3A and 3B has its surface on the fabrication container 5 side (right surface) mirror finished, and the reflection plate 19 on the right side has its surface on the fabrication container 5 side (left surface) mirror finished.

This enables the reflection plates 18 and 19 to reflect heat (infrared rays) from the heaters 24 to 27 and heat the powder material 8 in the fabrication container 5. Accordingly, the upper heating unit 17 is capable of heating the powder material 8 in the fabrication container 5 to a predetermined temperature and maintaining that temperature with less power consumption.

Also, the reflection plates 18 and 19 include upper portions 18a and 19a fixed to the above-mentioned support columns inside the housing 2, and lower portions 18c and 19c connected to the upper portions 18a and 19a by hinges 18b and 19b and being swingable in the left-right direction. This structure of the reflection plates 18 and 19 enables the recoater 14 to pass the reflection plates 18 and 19 via the lower portions 18c and 19c.

Note that, though not illustrated, heating units other than the upper heating units 15 to 17 are also provided in the powder bed fusion apparatus 1.

For example, on the sides of the fabrication container 5, a side heating unit is provided which laterally heats the powder material 8 in the fabrication container 5. Further, between the modeling table 11 and the support rod 12, a lower heating unit is provided which heats the powder material 8 in the fabrication container 5 from below. Furthermore, on the lower surface 13b of the carrying plate 13, a carrying plate heating unit is provided which heats the powder material 8 in contact with the carrying plate 13. Each of these heating units includes a plate-shaped electric resistance heater equipped with a temperature sensor.

The above-described storage containers 3 and 4, fabrication container 5, carrying plate 13, recoater 14, upper heating units 15 to 17, reflection plates 18 and 19, and so on are disposed in the housing 2.

In the top of the housing 2, on the other hand, two glass windows 2a and 2b are embedded, as illustrated in FIG. 2. A temperature detection unit 28 is provided above one window 2a among these windows 2a and 2b.

As illustrated in FIGS. 3A and 3B, the temperature detection unit 28 is a device that detects temperature by means of infrared radiation and is disposed inside the sides of the fabrication container 5 when viewed from above. In this way, the temperature detection unit 28 is capable of detecting the surface temperature of the powder material 8 inside the through-hole 13d of the carrying plate 13, which communicates with the opening of the fabrication container 5.

Note that a plurality of temperature detection units 28 may be provided and these temperature detection units 28 may be disposed at different positions inside the sides of the fabrication container 5 when viewed from above. In this way, the surface temperature of the powder material 8 can be detected more accurately.

Meanwhile, though not illustrated, the powder bed fusion apparatus 1 is provided with temperature detection units that detect the surface temperatures of the powder material 8 inside the through-holes 13c and 13e of the carrying plate 13, which communicate with the openings of the storage containers 3 and 4, in addition to the temperature detection unit 28.

Also, a laser beam emission unit 29 is provided above the other window 2b.

The laser beam emission unit 29 is a device that emits and scans a laser beam and is disposed inside the sides of the fabrication container 5 when viewed from above. The configuration of the laser beam emission unit 29 is as follows.

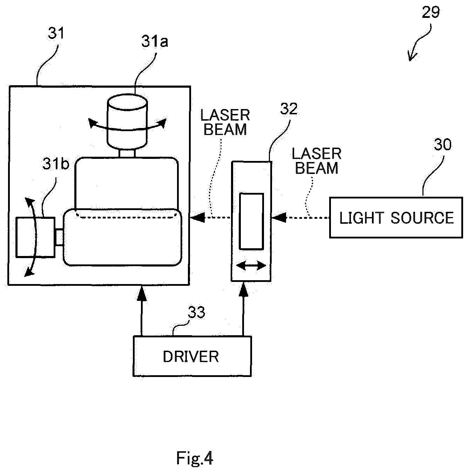

FIG. 4 is a block diagram explaining the configuration of the laser beam emission unit 29.

As illustrated in FIG. 4, the laser beam emission unit 29 includes a light source 30, a mirror 31, a lens 32, and a driver 33.

Among these components 30 to 33, the light source 30 is a $CO_2$ laser light source that emits a laser beam with a wavelength of, for example, 10.6 $\mu$m. Note that the light source 30 is not limited to a $CO_2$ laser light source, and may be a fiber laser light source that emits a laser beam with a wavelength of 1.07 $\mu$m.

The mirror 31 has a galvanometer mirror as an X mirror 31a and a galvanometer mirror as a Y mirror 31b, and changes the angle of a laser beam emitted from the light source 30 by changing the angles of the X mirror 31a and the Y mirror 31b.

The lens 32 changes the focal length of a laser beam emitted from the light source 30 by moving according to the movement of the laser beam.

Moreover, the driver 33 changes the angles of the X mirror 31a and the Y mirror 31b and moves the lens 32.

In the laser beam emission unit 29, a laser beam emitted from the light source 30 passes the lens 22, the X mirror 31a, and the Y mirror 31b in this order. At this time, the driver 33 drives the X mirror 31a and the Y mirror 31b to change their angles such that the laser beam is scanned in the X direction and the Y direction and applied to a particular area on the surface of the powder material 8 in the through-hole 13d. Further, the driver 33 drives the lens 32 to move it such that the laser beam is focused on the surface of the powder material 8.

Also, as illustrated in FIG. 2, a control unit 34 is disposed outside the housing 2.

The control unit 34 is configured with a computer including a CPU (Central Processing Unit) and a memory. The memory stores a program for performing various processes related to model fabrication, and the control unit 34 controls various devices in the powder bed fusion apparatus 1 in accordance with the program.

For example, the control unit 34 outputs control signals to the drivers for the support rods 9, 10, and 12 to raise or lower the supply tables 6 and 7 of the storage containers 3 and 4 and the modeling table 11 of the fabrication container 5. Further, the control unit 34 outputs a control signal to the driver for the recoater 14 to move the recoater 14 leftward or rightward over the upper surface 13a of the carrying plate 13.

Also, based on the type of the powder material 8 to be used for the model fabrication and data on the surface temperatures of the powder material 8 in the through-holes 13c, 13d, and 13e of the carrying plate 13 outputted from the temperature detection unit 28 and the other temperature detection units, the control unit 34 outputs control signals to the heaters 20 to 27 of the upper heating units 15 to 17 to adjust the surface temperatures of the powder material 8 in the through-holes 13c, 13d, and 13e.

Further, for the other heating units, the control unit 34 outputs control signals to those heaters based on temperature data outputted from the temperature sensors of the heaters to adjust the temperature of the powder material 8 in the fabrication container 5 and the temperature of the powder material 8 on the carrying plate 13.

Furthermore, based on the above-mentioned type of the powder material 8 and slice data (drawing pattern) of the three-dimensional model to be fabricated, the control unit 34 outputs a control signal to the laser beam emission unit 29 to adjust the laser beam application area in a thin surface layer of the powder material 8 inside the through-hole 13d and the energy density of the laser beam.

Now, slice data of a model will be described.

Slice data is data on a three-dimensional model to be fabricated sliced at predetermined intervals (e.g., 0.1 mm) in the height direction (Z direction) to be divided into a plurality of layers, and contains positions at each layer in its plane directions (X direction and Y direction) and so on.

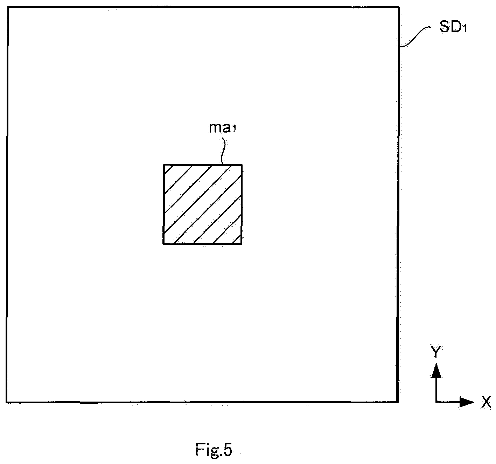

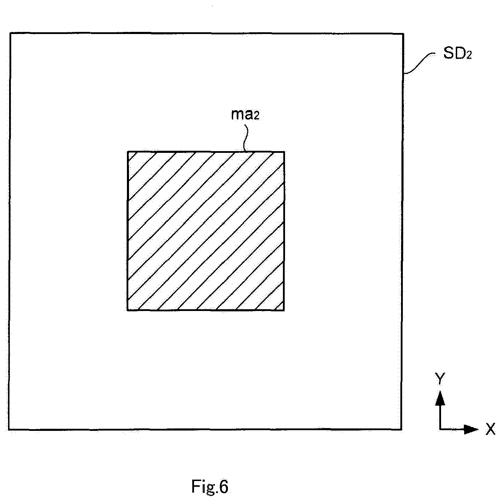

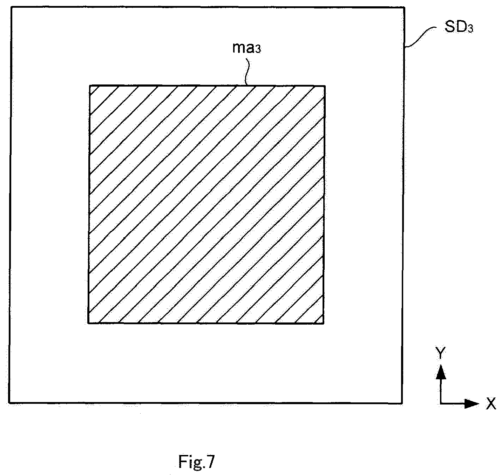

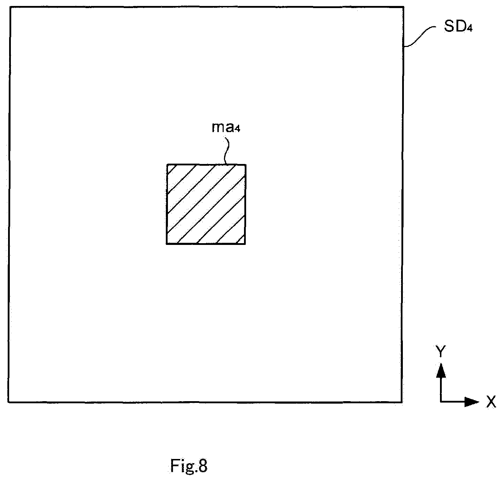

FIGS. 5 to 8 are diagrams explaining an example of the configuration of slice data on each layer of a model to be fabricated divided into four layers. Among FIGS. 5 to 8, the slice data in FIG. 5 is the slice data of the first layer (lowermost layer) of the model from the bottom, the slice data in FIG. 6 is the slice data of the second layer (intermediate layer), the slice data in FIG. 7 is the slice data of the third layer (intermediate layer), and the slice data in FIG. 8 is the slice data of the fourth layer (uppermost layer).

For example, as illustrated in FIG. 5, slice data $SD_1$ of the first layer contains data of a modeling area $ma_1$

which will be the first layer of the model. The positions of points in the slice data $SD_1$, including the modeling area mai, are expressed as coordinates in the X direction and the Y direction. Note that the outer edge of the slice data $SD_1$ corresponds to the outer edge of the through-hole 13d of the carrying plate 13 (or the opening of the fabrication container 5).

The configurations of pieces of slice data $SD_2$ to $SD_4$ of the remaining second to fourth layers are similar to that of the slice data $SD_1$ of the first layer.

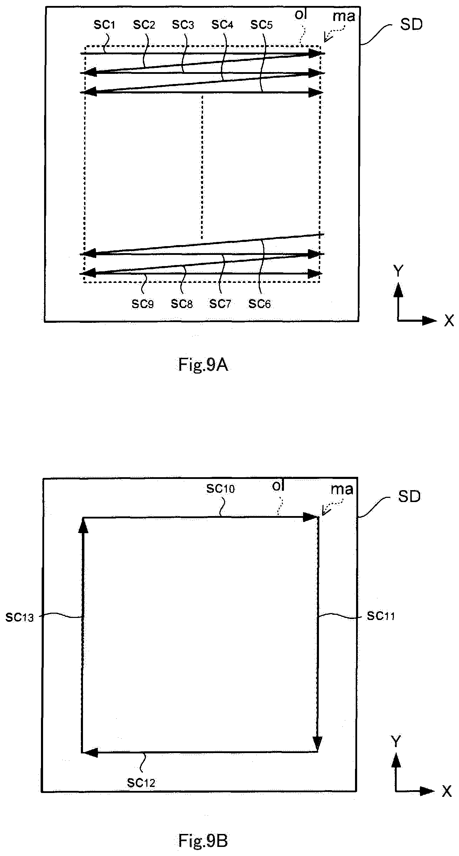

A laser beam scanning method will also be described. FIGS. 9A and 9B is a set of diagrams explaining a zigzag scanning method as an example laser beam scanning method.

In the zigzag scanning method, firstly, as illustrated in FIG. 9A, scan lines $sc_1$ to $sc_9$ each indicating a distance and direction of movement of a laser beam are disposed in a zigzag pattern on a portion of a modeling area ma in slice data SD that is slightly inside an outer edge line ol of the modeling area ma. Specifically, the odd-numbered scan lines $sc_1$, $sc_3$, scs, $sc_7$, and $sc_9$, which extend in the X direction, are disposed parallel to each other with a gap therebetween, and the even-numbered scan lines $sc_2$, $sc_4$, $sc_6$, and $sc_8$, which extend in a direction at an acute angle to the X direction, are disposed parallel to each other with a gap therebetween. The ends of the scan lines $sc_1$ to $sc_9$ are then connected to each other.

Further, as illustrated in FIG. 9B, scan lines $sc_{10}$ to $sc_{13}$ are disposed on the outer edge line ol of the modeling area ma in the slice data SD. The ends of the scan lines $sc_{10}$ to $sc_{13}$ are then connected to each other.

Based on the pieces of slice data $SD_1$ to $SD_4$ and the zigzag scanning method described above, the control unit 34 controls the laser beam emission unit 29 to emit and scan a laser beam over areas (modeling areas) in thin layers of the powder material 8 in the through-hole 13d of the carrying plate 13 corresponding to the modeling areas $ma_1$ to $ma_4$ in the pieces of slice data $SD_1$ to $SD_4$. A laser beam is applied to a modeling area in a thin layer of the powder material 8 in this manner.

The laser beam scanning method is not limited to the zigzag scanning method.

For example, a raster scanning method in which scan lines sc extending in the same direction (e.g., X direction or Y direction) are disposed parallel to each other with a gap therebetween in the modeling area ma in the slice data SD, or a scanning method in which scan lines sc are disposed in a spiral pattern along the outer edge line ol with a gap therebetween may be used as the laser beam scanning method.

The energy density of a laser beam will also be described. This energy density is expressed by the equation (1) below.

$$E = P/(V \cdot SS \cdot e) \ldots (1)$$

In the equation (1), E denotes the energy density ($J/m^3$) of a laser beam, P denotes the output (W) of the laser beam, V denotes the scan speed (m/s) of the laser beam, SS denotes the interval (m) between scans of the laser beam, and e denotes the thickness (m) of the thin layer of the powder material 8.

The equation (1) indicates that when a laser beam is applied to a modeling area in a thin layer of the powder material 8, the energy density E of the laser beam to be received by that modeling area can be increased, for example, by increasing the output P, lowering the scan speed V, or reducing the scan interval SS provided that the thickness e of the thin layer of the powder material 8 is the same.

Among the parameters of the energy density E, those other than the thickness e of the thin layer of the powder material 8, namely, the output P, the scan speed V, and the scan interval SS of the laser beam are parameters that can be changed by controlling the laser beam emission unit 29.

The control unit 34 adjusts the energy density E of the laser beam to be received by the modeling area in the thin layer of the powder material 8 by controlling the laser beam emission unit 29 so as to change one of the output P, the scan speed V, and the scan interval SS of the laser beam.

The powder bed fusion apparatus 1 is configured as above.

Next, a method of fabricating a model using the powder bed fusion apparatus 1 will be described.

For a simple description, it is assumed here that the fabrication container 5 and the storage containers 3 and 4 with the powder material 8 supplied therein are housed in the housing 2 of the powder bed fusion apparatus 1 and the powder bed fusion apparatus 1 is then set in the state illustrated in FIG. 3B.

Specifically, the upper surface of the powder material 8 in each of the storage containers 3 and 4 is at the same height as the upper surface 13a of the carrying plate 13. Moreover, the upper surface of the modeling table 11 of the fabrication container 5 is at the same height as the upper surface 13a of the carrying plate 13. Furthermore, the recoater 14 is disposed to the left of the storage container 3 on the upper surface 13a of the carrying plate 13.

When the powder bed fusion apparatus 1 is in such a state, the control unit 34 firstly generates the slice data SD of the model based on three-dimensional data of the model and the type of the powder material 8 inputted from outside the apparatus 1, and stores the slice data SD in the memory.

The control unit 34 then controls the driver for the support rod 9 of the storage container 3, the driver for the support rod 10 of the storage container 4, the driver for the support rod 12 of the fabrication container 5, and the driver for the recoater 14 so as to form a buffer layer of the powder material 8 on the modeling table 11 of the fabrication container 5.

In the powder bed fusion apparatus 1, a buffer layer of the powder material 8 is formed on the modeling table 11 before the start of fabrication of a model so that the model fabricated in the fabrication container 5 will not be fixedly attached to the upper surface of the modeling table 11.

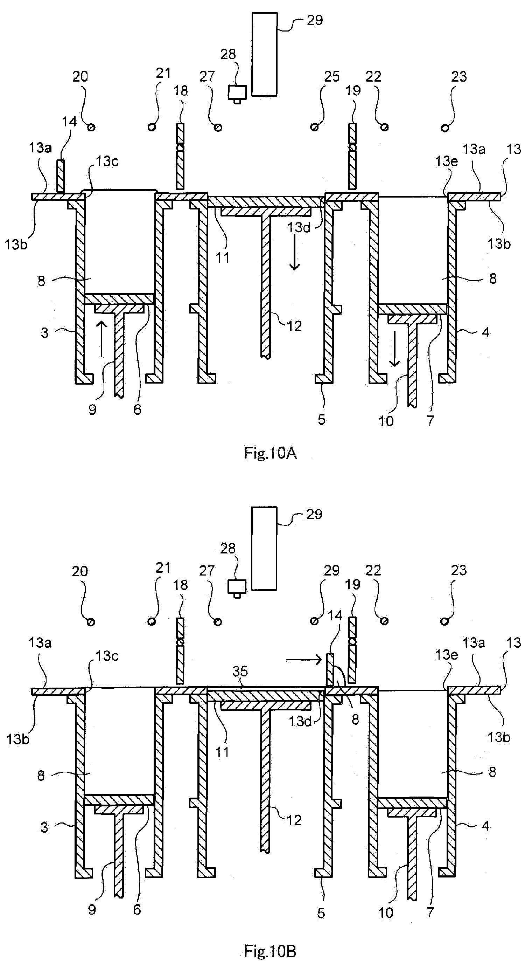

A method of forming the buffer layer will be described. FIGS. 10A to 13 are cross-sectional views of a buffer layer in the process of being formed.

First, as illustrated in FIG. 10A, the control unit 34 controls the driver for the support rod 9 of the left storage container 3 so as to raise the supply table 6. As a result, the powder material 8 in the storage container 3 is caused to project through the through-hole 13c to above the upper surface 13a of the carrying plate 13.

Further, the control unit 34 controls the driver for the support rod 12 of the fabrication container 5 so as to lower the modeling table 11 by the thickness of a single thin layer of the powder material 8, e.g., 0.1 mm, and also controls the driver for the support rod 10 of the right storage container 4 so as to lower the supply table 7.

Subsequently, as illustrated in FIG. 10B, the control unit 34 controls the driver for the recoater 14 so as to move the recoater 14 rightward over the upper surface 13a of the carrying plate 13. As a result, the recoater 14 is caused to scrape the powder material 8 in the storage container 3 projecting from the upper surface 13a and carry it over the upper surface 13a into the fabrication container 5 through the through-hole 13d.

The powder material 8 in the storage container 3 is thus supplied to the fabrication container 5 to thereby form a first thin layer 35 of the powder material 8 on the modeling table 11.

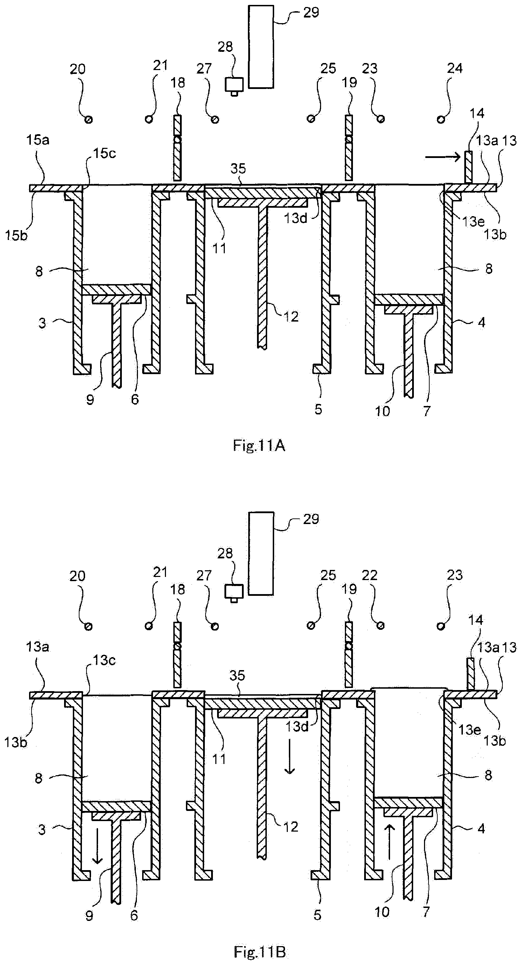

Further, as illustrated in FIG. 11A, the control unit 34 moves the recoater 14 rightward. As a result, the recoater 14 is caused to carry the remaining powder material 8 not used in the formation of the thin layer 35 over the upper surface 13a into the storage container 4 through the through-hole 13e.

Thus, the remaining powder material 8 is stored into the storage container 4.

The control unit 34 then stops the recoater 14 at a position to the right of the storage container 4.

Thereafter, as illustrated in FIG. 11B, the control unit 34 raises the supply table 7 of the storage container 4. As a result, the powder material 8 in the storage container 4 is caused to project through the through-hole 13e to above the upper surface 13a of the carrying plate 13.

Further, the control unit 34 lowers the modeling table 11 of the fabrication container 5 by the thickness of a single thin layer of the powder material 8 mentioned above, and also lowers the supply table 6 of the storage container 3.

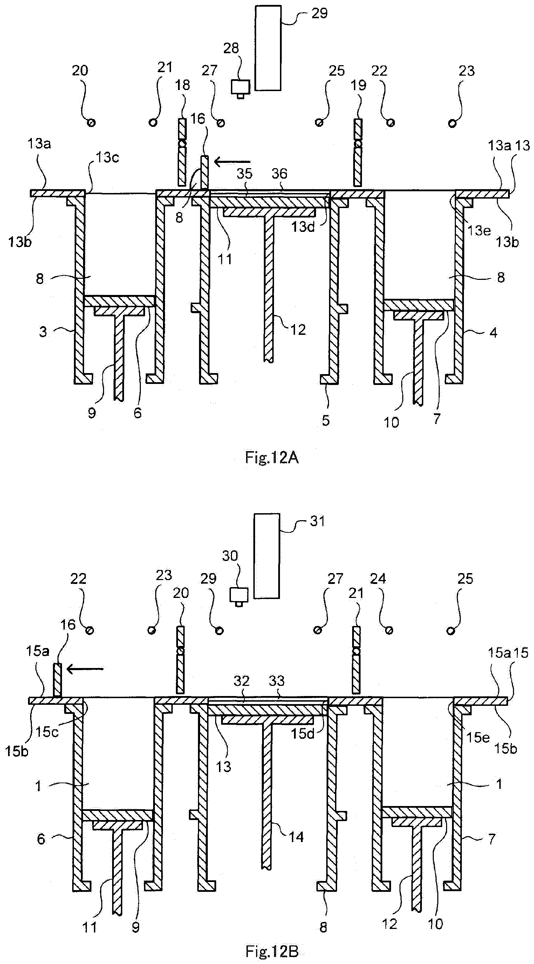

Subsequently, as illustrated in FIG. 12A, the control unit 34 moves the recoater 14 leftward over the upper surface 13a of the carrying plate 13. As a result, the recoater 14 is caused to scrape the powder material 8 in the storage container 4 projecting from the upper surface 13a and carry it over the upper surface 13a into the fabrication container 5 through the through-hole 13d.

The powder material 8 in the storage container 4 is thus supplied to the fabrication container 5 to thereby form a second thin layer 36 of the powder material 8 above the modeling table 11.

Further, as illustrated in FIG. 12B, the control unit 34 moves the recoater 14 leftward. As a result, the recoater 14 carries the remaining powder material 8 not used in the formation of the thin layer 36 over the upper surface 13a into the storage container 3 through the through-hole 13c.

Thus, the remaining powder material 8 is stored into the storage container 3.

The control unit 34 then stops the recoater 14 at a position to the left of the storage container 3.

Thereafter, in the fabrication container 5, a third thin layer 37 of the powder material 8 is formed on the second thin layer 36 in the same manner as the formation of the first thin layer 35, and a fourth thin layer 38 of the powder material 8 is further formed on the third thin layer 37 in the same manner as the formation of the second thin layer 36.

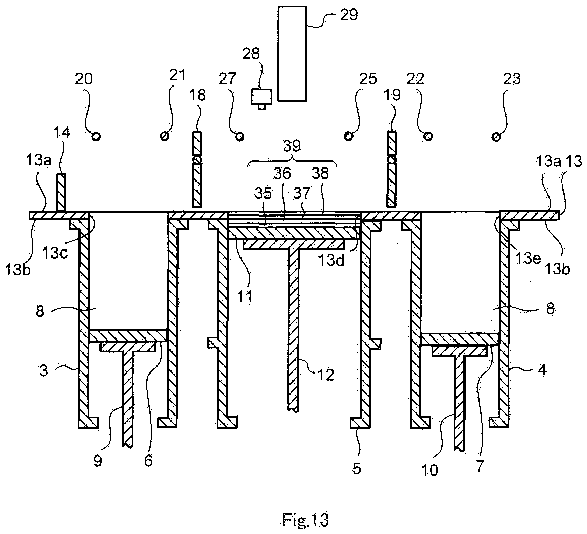

By repeating formation of a thin layer of the powder material 8 as described above, the thin layers 36 to 38 of the powder material 8 are laminated on the modeling table 11 of the fabrication container 5 as illustrated in FIG. 13, so that a buffer layer 39 with a predetermined thickness (e.g., a thickness of 10 mm) is formed.

Note that FIG. 13 illustrates the four thin layers 36 to 38 of the powder material 8 as the buffer layer 39 for convenience. The actual number of thin layers of the powder material 8 is a number corresponding to the thickness of the buffer layer 39.

The control unit 34 then controls the heaters 20 to 27 of the upper heating units 15 to 17 so as to preheat the powder material 8 in each of the storage containers 3 and 4 and the powder material 8 in the fabrication container 5.

In the powder bed fusion apparatus 1, as will be described later, a laser beam is applied to the modeling area in a thin layer of the powder material 8 to fuse the powder material 8 and then the powder material 8 is solidified to form a solidified layer. Here, if there is a large difference in temperature in the thin layer of the powder material 8 between the modeling area to be irradiated with the laser beam and the area around it, the solidified layer may excessively shrink after the application of the laser beam and the solidified layer may warp.

In order to suppress such warpage of the solidified layer, the powder material 8 in each of the storage containers 3 and 4 and the powder material 8 in the fabrication container 5 are preheated before the start of fabrication of the model. A method of this preheating will be described.

First, the control unit 34 turns on the heaters 20 to 27 of the upper heating units 15 to 17 and the heaters of the other heating units (the side heating unit, the lower heating unit, and the carrying plate heating unit) at the same time as the start of the formation of the buffer layer 39.

Next, the control unit 34 adjusts the amounts of heat generation by the heaters 20 to 27 based on the type of the powder material 8 and the data on the surface temperatures of the powder material 8 in the through-holes 13c, 13d, and 13e of the carrying plate 13 outputted from the temperature detection unit 28 and the other temperature detection units. Further, for the other heating units, the control unit 34 adjusts the amounts of heat generation by their heaters based on the temperature data outputted from the temperature sensors of the heaters.

As a result, the surface of the powder material 8 in each of the through-hole 13c, the through-hole 13d, and the through-hole 13e of the carrying plate 13 is heated to a predetermined temperature and maintained at this temperature.

In particular, the surface of the powder material 8 in the through-hole 13d, which communicates with the opening of the fabrication container 5, is maintained at a temperature suitable for starting the model fabrication, e.g., a temperature lower than the melting point of the powder material 8 by about 10°C to 15°C.

For example, in the case of using polypropylene powder as the powder material 8, the surface of the powder material 8 in the through-hole 13d is maintained at a temperature of approximately 115°C to 120°C as the suitable temperature, since the melting point of polypropylene is approximately 130°C.

The powder material 8 is preheated in this manner. Meanwhile, such preheating is continued not only during the formation of the buffer layer 39 but also during the fabrication of the later-described model on the buffer layer 39.

In order to perform the preheating, all heaters of the powder bed fusion apparatus 1 are turned on at the same time as the start of the formation of the buffer layer 39. Note, however, that all heaters of the powder bed fusion apparatus 1 may be turned on prior to the start of the formation of the buffer layer 39. For example, all heaters of the powder bed fusion apparatus 1 may be turned on immediately after the storage containers 3 and 4 and the fabrication container 5 are housed in the housing 2 of the powder bed fusion apparatus 1.

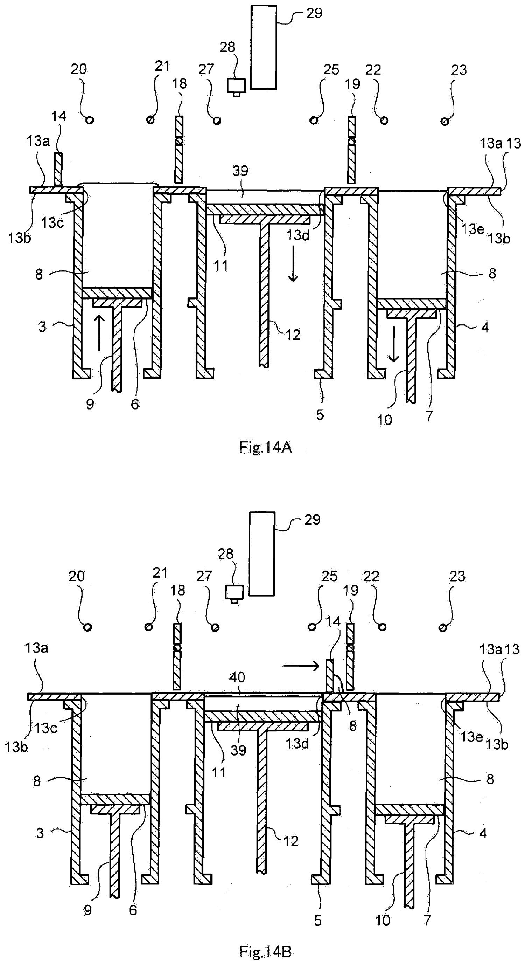

Next, a method of fabricating a model will be described. FIGS. 14A to 18 are cross-sectional views of a model in the process of being fabricated.

After forming the buffer layer 39 and preheating the powder material 8, the control unit 34 raises the supply table 6 of the left storage container 3, as illustrated in FIG. 14A. As a result, the powder material 8 in the storage container 3 is caused to project through the through-hole 13c to above the upper surface 13a of the carrying plate 13.

Further, the control unit 34 lowers the modeling table 11 by the thickness of a single thin layer of the powder material 8 mentioned above (0.1 mm), and also lowers the supply table 7 of the right storage container 4.

Subsequently, as illustrated in FIG. 14B, the control unit 34 moves the recoater 14 rightward over the upper surface 13a of the carrying plate 13. As a result, the recoater 14 is caused to scrape the powder material 8 in the storage container 3 projecting from the upper surface 13a and carry it over the upper surface 13a into the fabrication container 5 through the through-hole 13d.

As a result, a first thin layer 40 of the powder material 8 for the model fabrication is formed on the buffer layer 39.

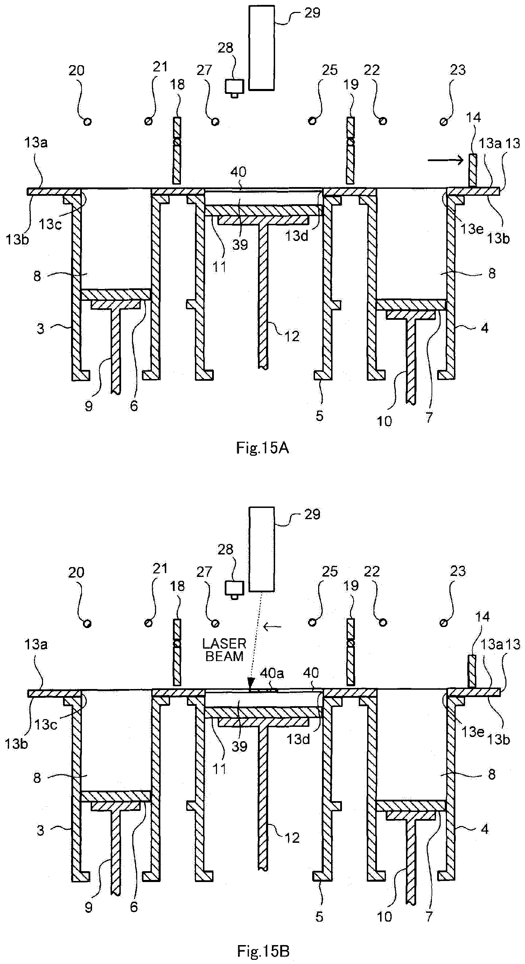

Further, as illustrated in FIG. 15A, the recoater 14 is moved rightward to thereby cause the recoater 14 to carry the remaining powder material 8 not used in the formation of the thin layer 40 over the upper surface 13a into the storage container 4 through the through-hole 13e.

Thus, the remaining powder material 8 is stored into the storage container 4.

The control unit 34 then stops the recoater 14 at a position to the right of the storage container 4.

Then, as illustrated in FIG. 15B, the control unit 34 controls the laser beam emission unit 29 based on the slice data $SD_1$ of the first layer to thereby emit and scan a laser beam over the area (modeling area) in the first thin layer 40 corresponding to the modeling area $ma_1$ in the slice data $SD_1$.

A laser beam is applied to the modeling area in the first thin layer 40 in this manner. As a result, the powder material 8 in this modeling area is fused, and then is solidified to form a first solidified layer 40a.

The control unit 34 then stops the emission and scan of the laser beam.

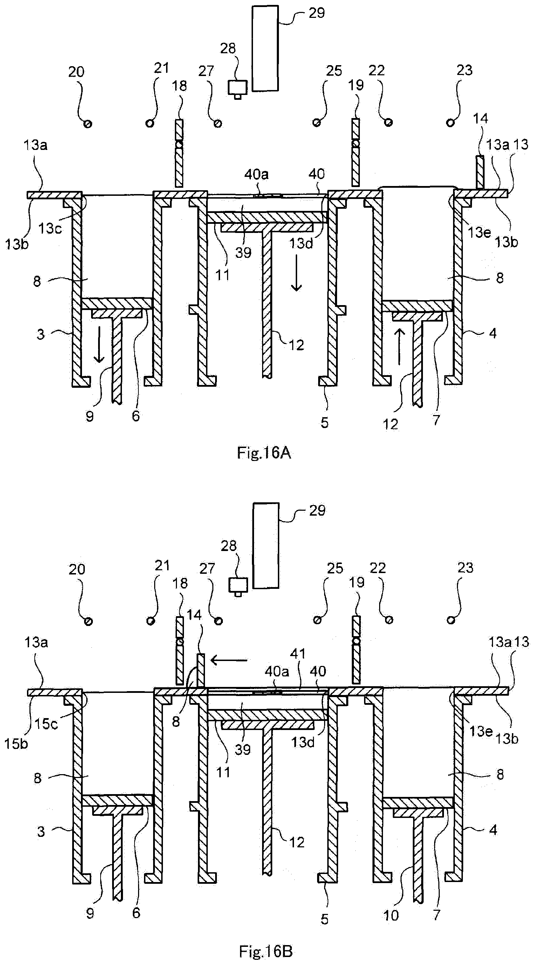

Thereafter, as illustrated in FIG. 16A, the control unit 34 raises the supply table 7 of the right storage container 4. As a result, the powder material 8 in the storage container 4 is caused to project through the through-hole 13e to above the upper surface 13a of the carrying plate 13.

Further, the control unit 34 lowers the modeling table 11 by the thickness of a single thin layer of the powder material 8, and also lowers the supply table 6 of the left storage container 3.

Subsequently, as illustrated in FIG. 16B, the control unit 34 moves the recoater 14 leftward over the upper surface 13a of the carrying plate 13. As a result, the recoater 14 is caused to scrape the powder material 8 in the storage container 4 projecting from the upper surface 13a and carry it over the upper surface 13a into the fabrication container 5 through the through-hole 13d.

As a result, a second thin layer 41 of the powder material 8 is formed on the first thin layer 40 with the solidified layer 40a formed therein.

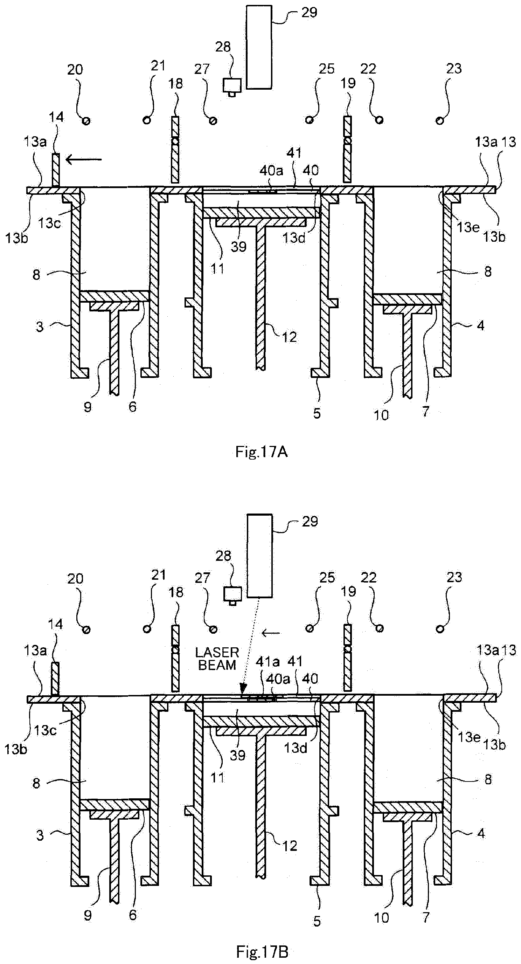

Further, as illustrated in FIG. 17A, the control unit 34 moves the recoater 14 leftward to thereby cause the recoater 14 to carry the remaining powder material 8 not used in the formation of the thin layer 41 over the upper surface 13a into the storage container 3 through the through-hole 13c.

Thus, the remaining powder material 8 is stored into the storage container 3.

The control unit 34 then stops the recoater 14 at a position to the left of the storage container 3.

Then, as illustrated in FIG. 17B, the control unit 34 controls the laser beam emission unit 29 based on the slice data $SD_2$ of the second layer to thereby emit and scan a laser beam over the area (modeling area) in the second thin layer 41 corresponding to the modeling area $ma_2$ in the slice data $SD_2$.

A laser beam is applied to the modeling area in the second thin layer 41 in this manner. As a result, the powder material 8 in this modeling area is fused, and then is solidified to form a second solidified layer 41a.

The control unit 34 then stops the emission and scan of the laser beam.

Thereafter, in the fabrication container 5, a third thin layer 42 and solidified layer 42a of the powder material 8 are formed on the second thin layer 41 and solidified layer 41a in the same manner as the formation of the first thin layer 40 and solidified layer 40a, and a fourth thin layer 43 and solidified layer 43a of the powder material 8 are formed on the third thin layer 42 and solidified layer 42a in the same manner as the formation of the second thin layer 41 and solidified layer 41a.

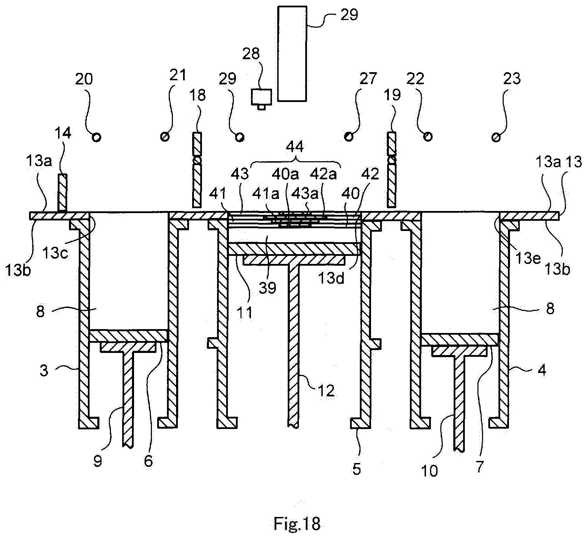

By repeating formation of a thin layer of the powder material 8 and formation of a solidified layer in this thin layer as described above, the solidified layers 40a to 43a are laminated on the buffer layer 39 in the fabrication container 5 as illustrated in FIG. 18, so that a three-dimensional model 44 is fabricated.

When fabricating the model 44, the control unit 34 adjusts the energy density E of the laser beam to be applied to the modeling areas in the thin layers 40 to 43 as follows.

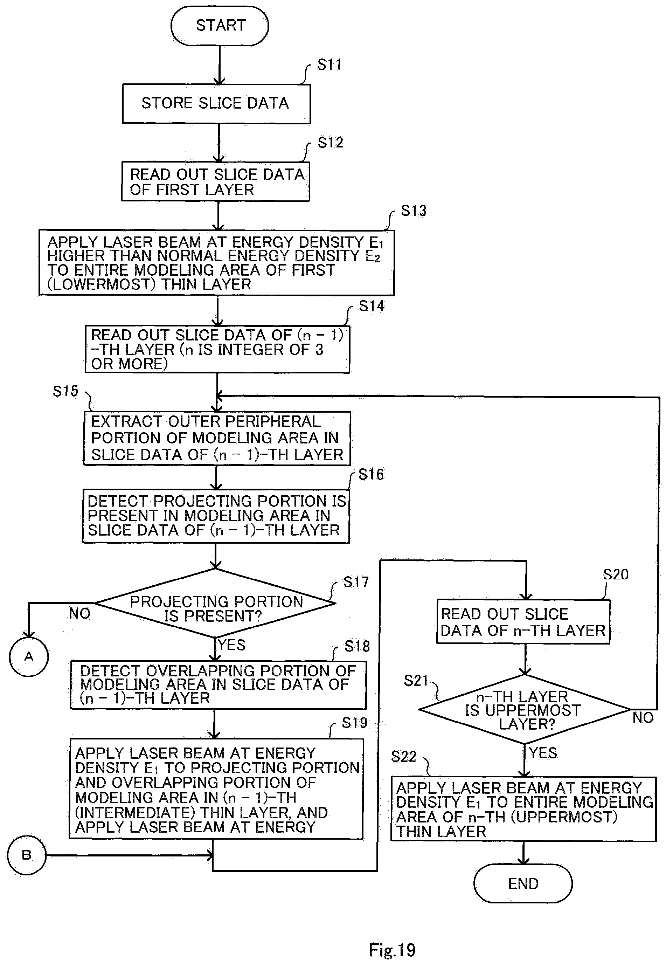

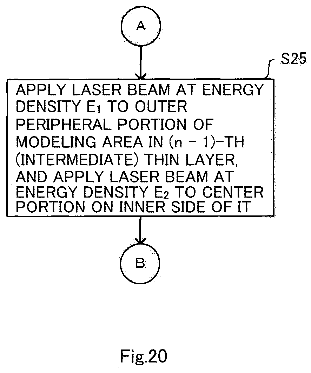

FIGS. 19 and 20 are flowcharts explaining a method implemented by the control unit 34 at the time of fabricating a model to adjust the energy density E of the laser beam to be applied to the modeling areas in n (n is an integer of 3 or more) thin layers of the powder material 8.

As illustrated in FIG. 19, firstly in step S11, the control unit 34 generates the slice data SD of the model to be fabricated based on the three-dimensional data of the model and the type of the powder material 8, as mentioned earlier, and stores the slice data SD in the memory.

For example, in the case of fabricating the model 44 formed of the four solidified layers 40a to 43a illustrated in FIG. 18, the control unit 34, in this step S11, generates the pieces of slice data $SD_1$ to $SD_4$ illustrated in FIGS. 5 to 8 as the slice data of the model and stores them in the memory.

The control unit 34 then controls the support rods 9, 10, and 12 and the recoater 14 so as to form the buffer layer 39 as illustrated in FIGS. 10A to 13, and also controls the heaters 20 to 27 so as to preheat the powder material 8.

Then, proceeding to step S12, the control unit 34 reads the slice data $SD_1$ of the first layer of the model from the bottom out of the memory.

The control unit 34 thereafter controls the support rods 9, 10, and 12 and the recoater 14 so as to form the first thin layer 40 of the powder material 8 as illustrated in FIGS. 14A to 15A.

Then, proceeding to step S13, the control unit 34 controls the laser beam emission unit 29 based on the slice data $SD_1$ of the first layer to thereby apply a laser beam at an energy density $E_1$ higher than a normal energy density $E_2$ to the entirety of the modeling area in the first thin layer 40 corresponding to the modeling area $ma_1$ in this slice data $SD_1$.

Here, the normal energy density $E_2$ refers to an energy density E which is set according to the type of the powder material 8 and at which the powder material 8 in a preheated state gets fused to the minimum extent. The energy density $E_1$ is higher than this normal energy density $E_2$.

For example, the control unit 34 controls the laser beam emission unit 29 so as to cause the light source 30 to emit a laser beam with an output $P_1$ which is higher than an output $P_2$ for application at the normal energy density $E_2$ to the entire modeling area in the first thin layer 40, and so as to cause the driver 33 to scan the laser beam in a zigzag manner as illustrated in FIGS. 9A and 9B at a scan speed $V_1$ and a scan line interval $SS_1$ which are equal to a scan speed $V_2$ and a scan line interval $SS_2$ for application at the normal energy density $E_2$.

Thus, the energy density E of the laser beam to be received by the entire modeling area in the first thin layer 40 is the energy density $E_1$ higher than the normal energy density $E_2$.

As a result of step S13, the first solidified layer 40a is formed at the modeling area in the first thin layer 40 of the powder material 8, as illustrated in FIG. 15B.

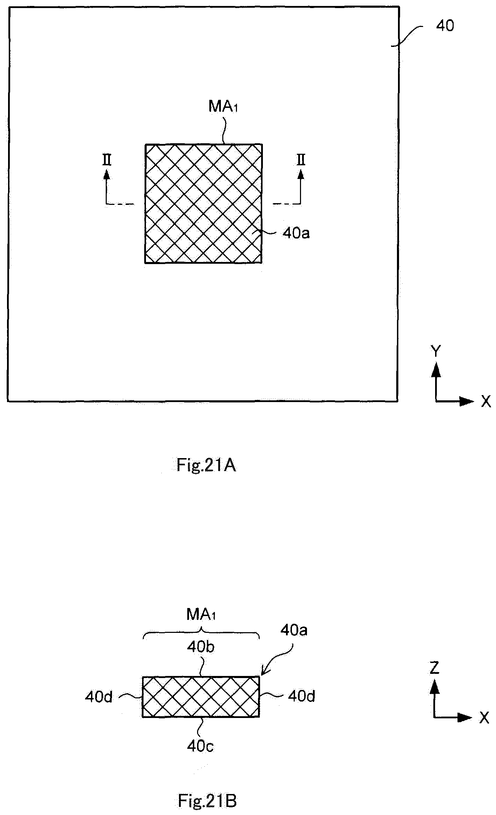

FIG. 21A is a top view illustrating the configuration of the first solidified layer 40a from the bottom as the lowermost layer, and FIG. 21B is a cross-sectional view along II-II line in FIG. 21A.

As illustrated in FIG. 21A, the solidified layer 40a is formed at a modeling area $MA_1$ in the first thin layer 40 as a result of step S13.

The entire modeling area $MA_1$ illustrated with mesh in FIGS. 21A and 21B has been irradiated with a laser beam at the energy density $E_1$, which is higher than the normal energy density $E_2$. This has enabled the powder material 8 at the modeling area $MA_1$ to be strongly fused.

Accordingly, the number of open pores (see the open pores OP in FIG. 1) formed in the entirety of the surfaces of the solidified layer 40a (an upper surface 40b, a lower surface 40c, and a side surface 40d) can be less than the number of open pores formed in a case where a laser beam is applied at the normal energy density $E_2$.

Further, the number of closed pores (see the closed pores CP in FIG. 1) formed inside the solidified layer 40a can also be less than the number of closed pores formed in the case where a laser beam is applied at the normal energy density $E_2$.

Specifically, the porosity of the solidified layer 40a with respect to the pores formed on and in it (open pores and closed pores) can be reduced to a range of 0.1% to 5% and preferably to a range of 0.1% to 1%.

Note that if the energy density $E_1$ is excessively higher than the normal energy density $E_2$, bubbles may be generated inside the melted powder material 8 and inhibit reduction of the number of open pores and closed pores to be formed in the solidified layer 40a.

For this reason, the energy density $E_1$ is set to be 1.2 to 2 times higher than the energy density $E_2$.

Then, proceeding to step S14, the control unit 34 reads slice data $SD_{n-1}$ of the (n - 1)-th layer of the model out of the memory.

Thereafter, the control unit 34 recognizes the (n - 1)-th layer of the model as an intermediate layer, and controls the support rods 9, 10, and 12 and the recoater 14 so as to, for example, form the second thin layer 41 of the powder material 8 as an intermediate layer as illustrated in FIGS. 16A to 17A or form the third thin layer 42 of the powder material 8 as illustrated in FIG. 18.

Then, proceeding to step S15, the control unit 34 extracts an outer peripheral portion $opa_{n-1}$ of a modeling area $ma_{n-1}$ in the slice data $SD_{n-1}$ of the (n - 1)-th layer.

In this step S15, the control unit 34 extracts the portion of the modeling area $ma_n$ - 1 covering a predetermined width, e.g., the thickness of a thin layer of the powder material 8 (0.1 mm), inwardly from its outer edge line as the outer peripheral portion $opa_n$ -1.

Then, proceeding to step S16, the control unit 34 refers to the slice data of the (n - 2)-th layer of the model and the slice data of the n-th layer of the model in the memory, and detects a projecting portion $pa_{n-1}$ of the modeling area $ma_{n-1}$ in the slice data $SD_{n-1}$ of the (n - 1)-th layer.

In this step S16, firstly, the control unit 34 superimposes the slice data of the (n - 2)-th layer, which lies directly under the (n - 1)-th layer, over the slice data $SD_{n-1}$ of the (n - 1)-th layer, and detects the portion of the modeling area $ma_{n-1}$ in the slice data $SD_{n-1}$ of the (n - 1)-th layer projecting outward from a modeling area $ma_{n-2}$ in the slice data of the (n - 2)-th layer when viewed from below.

Subsequently, the control unit 34 superimposes the slice data of the n-th layer, which lies directly on the (n - 1)-th layer, over the slice data $SD_{n-1}$ of the (n - 1)-th layer, and detects the portion of the modeling area $ma_{n-1}$ in the slice data $SD_{n-1}$ of the (n - 1)-th layer projecting outward from a modeling area $ma_n$ in the slice data of the n-th layer when viewed from above.

Then, the control unit 34 detects the portion which is the portion projecting outward from the modeling area $ma_{n-2}$ when viewed from below and the portion projecting outward from the modeling area $ma_n$ when viewed from above as the projecting portion $pa_{n-1}$ of the modeling area $ma_{n-1}$ in the (n - 1)-th layer.

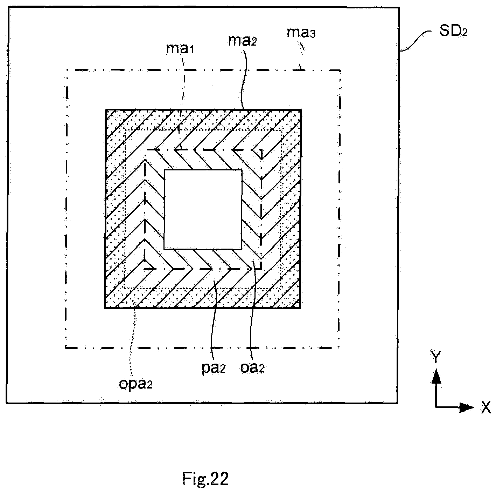

FIG. 22 is a diagram explaining the configuration of the slice data $SD_2$ of the second layer as an example intermediate layer in a state where the slice data $SD_1$ of the first layer directly under the second layer and the slice data $SD_3$ of the third layer directly on the second layer are superimposed on the slice data $SD_2$.

In this FIG. 22, the modeling area $ma_2$ in the slice data $SD_2$ of the second layer is indicated by a solid line. On the other hand, the modeling area $ma_1$ in the slice data $SD_1$ of the first layer is indicated by a long dashed short dashed line, and the modeling area $ma_3$ in the slice data $SD_3$ of the third layer is indicated by a long dashed double-short dashed line.

In step S15, the control unit 34 extracts the portion of the modeling area $ma_2$ covering the predetermined width inwardly from its outer edge line (the dotted portion in FIG. 22) as an outer peripheral portion $opa_2$ of the modeling area $ma_2$ in the second layer.

Also, as illustrated in FIG. 22, the modeling area $ma_2$ in the second layer is smaller than the modeling area $ma_3$ in the third layer directly on the second layer and conversely is larger than the modeling area $ma_1$ in the first layer lying directly under the second layer. Thus, the modeling area $ma_2$ in the second layer does not have a portion projecting outward from the modeling area $ma_3$ in the third layer when viewed from above, but has a portion projecting outward from the modeling area $ma_1$ in the first layer when viewed from below.

In the example of FIG. 22, in step S16, the control unit 34 detects only the portion projecting outward from the modeling area $ma_1$ when viewed from below (the portion with the diagonal lines extending upward toward the right in FIG. 22) as a projecting portion $pa_2$ of the modeling area $ma_2$ in the second layer.

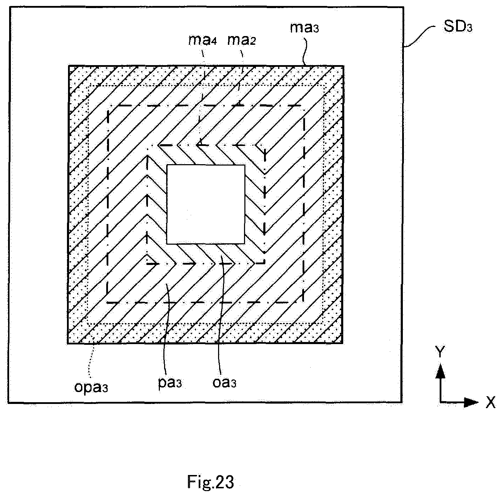

Also, FIG. 23 is a diagram explaining the configuration of the slice data $SD_3$ of the third layer as another example intermediate layer in a state where the slice data $SD_2$ of the second layer directly under the third layer and the slice data $SD_4$ of the fourth layer directly on the third layer are superimposed on the slice data $SD_3$.

In this FIG. 23, the modeling area $ma_3$ in the slice data $SD_3$ of the third layer is indicated by a solid line. On the other hand, the modeling area $ma_2$ in the slice data $SD_2$ of the second layer is indicated by a long dashed short dashed line, and the modeling area $ma_4$ in the slice data $SD_4$ of the fourth layer is indicated by a long dashed double-short dashed line.

In step S15, the control unit 34 extracts the portion of the modeling area $ma_3$ covering the predetermined width inwardly from its outer edge line (the dotted portion in FIG. 23) as an outer peripheral portion $opa_3$ of the modeling area $ma_3$ in the third layer.

Also, as illustrated in FIG. 23, the modeling area $ma_3$ in the third layer is larger than the modeling area $ma_4$ in the fourth layer directly on the third layer and also is larger than the modeling area $ma_2$ in the second layer directly under the third layer. Thus, the modeling area $ma_3$ in the third layer has a portion projecting outward from the modeling area $ma_4$ in the fourth layer when viewed from above and a portion projecting outward from the modeling area $ma_2$ in the second layer when viewed from below.

In the example of FIG. 23, in step S16, the control unit 34 detects the portion which is the portion projecting outward from the modeling area $ma_4$ when viewed from above and the portion projecting outward from the modeling area $ma_2$ when viewed from below (the portion with the diagonal lines extending upward toward the right in FIG. 23) as a projecting portion $pa_3$ of the modeling area $ma_3$ in the third layer.

Then, proceeding to step S17, the control unit 34 determines whether a projecting portion $pa_{n-1}$ is present in the modeling area $ma_{n-1}$ in the slice data $SD_{n-1}$ of the (n - 1)-th layer.

If determining in step S17 that a projecting portion $pa_{n-1}$ is not present in the modeling area $ma_{n-1}$ in the slice data $SD_{n-1}$ of the (n - 1)-th layer (NO), the processing is proceeded to step S25 (see FIG. 20).

If determining in step S17 that a projecting portion $pa_{n-1}$ is present in the modeling area $ma_{n-1}$ in the slice data $SD_{n-1}$ of the (n - 1)-th layer (YES), the processing is proceeded to step S18.

Meanwhile, in the examples of FIGS. 22 and 23, the projecting portions $pa_2$ and $pa_3$ cover the entire outer peripheral portions $opa_2$ and $opa_3$ in the respective intermediate layers.

However, there are also cases where the projecting portion covers only part of the outer peripheral portion of the intermediate layer.

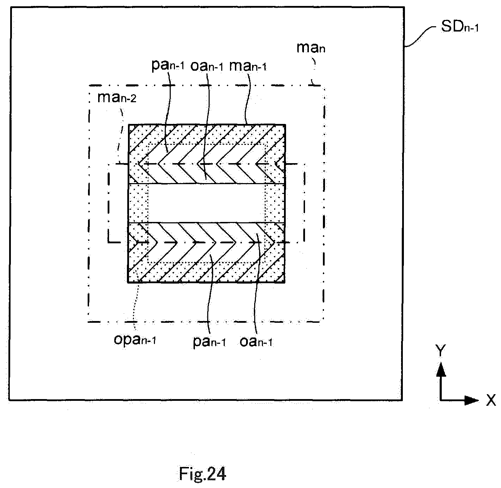

FIG. 24 is a diagram explaining the configuration of the slice data $SD_{n-1}$ of the (n - 1)-th layer as an example intermediate layer with projecting portions covering part of its outer peripheral portion, in a state where the slice data of the (n - 2)-th layer directly under the (n - 1)-th layer and the slice data of the n-th layer directly on the (n - 1)-th layer are superimposed on the slice data $SD_{n-1}$.

In this FIG. 24, the modeling area $ma_{n-1}$ in the slice data $SD_{n-1}$ of the (n - 1)-th layer is indicated by a solid line. On the other hand, the modeling area $ma_{n-2}$ in the slice data of the (n - 2)-th layer is indicated by a long dashed short dashed line, and the modeling area $ma_n$ in the slice data of the n-th layer is indicated by a long dashed double-short dashed line.

As illustrated in FIG. 24, in the modeling area $ma_{n-1}$ in the slice data $SD_{n-1}$ of the (n - 1)-th layer as an intermediate layer, the portion covering the predetermined width inwardly from the outer edge line is the outer peripheral portion $opa_{n-1}$ (the dotted portion in FIG. 24).

Also, this modeling area $ma_{n-1}$ does not have a portion projecting outward from the modeling area $ma_n$ in the n-th layer directly on it when viewed from above but has projecting portions $pa_{n-1}$ projecting outward from the modeling area $ma_{n-2}$ in the (n - 2)-th layer directly under it when viewed from below (the portions with the diagonal lines extending upward toward the right in FIG. 24).

Further, these projecting portions $pa_{n-1}$ are present along the entire opposite ends of the modeling area $ma_{n-1}$ in the Y direction but are not present along the entire opposite ends in the X direction.

In sum, in the example of FIG. 24, the projecting portions $pa_{n-1}$ cover only part of the outer peripheral portion $opa_{n-1}$ in the intermediate layer.

In such a case too, in step S16, the control unit 34 detects a portion which is each portion projecting outward from the modeling area $ma_{n-1}$ when viewed from below (each portion with the diagonal lines extending upward toward the right in FIG. 24) as the projecting portion $pa_{n-1}$ of the modeling area $ma_{n-1}$ in the (n - 1)-th layer.

Then, in step S17, by determining in step S17 that a projecting portion $pa_{n-1}$ is present in the modeling area $ma_{n-1}$, the processing is proceeded to step S18.

In this step S18, the control unit 34 refers to the slice data of the (n - 2)-th layer and the slice data of the n-th layer in the memory, and detects an overlapping portion $oa_{n-1}$ of the modeling area $ma_{n-1}$ in the slice data $SD_{n-1}$ of the (n - 1)-th layer.

In this step S18, the control unit 34 detects the portion of the modeling area $ma_{n-1}$ in the slice data $SD_{n-1}$ of the (n - 1)-th layer, as the overlapping portion $oa_{n-1}$, overlapping the modeling areas $ma_{n-2}$ and $ma_n$ in the pieces of slice data of the vertically adjacent (n - 2)-th and n-th layers, lying on the inner side of the projecting portion $pa_{n-1}$, and having

a predetermined width, e.g., a width equal to the thickness of a thin layer of the powder material 8 (0.1 mm).

The width of the overlapping portion $oa_{n-1}$ is not limited to the width equal to the thickness of a thin layer of the powder material 8. For example, the width of the overlapping portion $oa_{n-1}$ may be a width larger than the thickness of a thin layer of the powder material 8, depending on the type (hardness) of the powder material 8.

In the example of FIG. 22, in step S18, the control unit 34 detects the portion overlapping the modeling area $ma_1$ in the first layer and the modeling area $ma_3$ in the third layer, lying on the inner side of the projecting portion $pa_2$, and having the predetermined width (the portion with the diagonal lines extending downward toward the right in FIG. 22) as an overlapping portion $oa_2$ of the modeling area $ma_2$ in the second layer.

Also, in the example of FIG. 23, the control unit 34 detects the portion overlapping the modeling area $ma_2$ in the second layer and the modeling area $ma_4$ in the fourth layer, lying on the inner side of the projecting portion $pa_3$, and having the predetermined width (the portion with the diagonal lines extending downward toward the right in FIG. 23) as an overlapping portion $oa_3$ of the modeling area $ma_3$ in the third layer.

Furthermore, in the example of FIG. 24, the control unit 34 detects the portion overlapping the modeling area $ma_{n-2}$ in the (n - 2)-th layer and the modeling area $ma_n$ in the n-th layer, lying on the inner side of each projecting portion $pa_{n-1}$, and having the predetermined width (the portion with the diagonal lines extending downward toward the right in FIG. 24) as an overlapping portion $oa_{n-1}$ of the modeling area $ma_{n-1}$ in the (n - 1)-th layer.

Then, proceeding to step S19, the control unit 34 controls the laser beam emission unit 29 based on the slice data $SD_{n-1}$ of the (n - 1)-th layer as an intermediate layer such that, in the modeling area in the (n - 1)-th thin layer corresponding to the modeling area $ma_{n-1}$ in this slice data $SD_{n-1}$, a laser beam is applied at the energy density $E_1$, which is higher than the normal energy density $E_2$, to the portion corresponding to the projecting portion $pa_{n-1}$ and the overlapping portion $oa_{n-1}$ (projecting portion and overlapping portion), and a laser beam is applied at the normal energy density $E_2$ to the portion corresponding to the portion on the inner side of the projecting portion $pa_{n-1}$ and the overlap $oa_{n-1}$ (center portion).

For example, the control unit 34 controls the laser beam emission unit 29 so as to cause the light source 30 to emit a laser beam with the output $P_1$, which is higher than the output (normal output) $P_2$ for application at the normal energy density $E_2$, to the projecting portion and the overlapping portion of the modeling area in the (n - 1)-th thin layer, and so as to cause the driver 33 to scan the laser beam in a zigzag manner at the scan speed $V_1$ and the scan line interval $SS_1$, which are equal to the scan speed (normal scan speed) $V_2$ and the scan line interval (normal scan line interval) $SS_2$ for application at the normal energy density $E_2$.

Subsequently, the control unit 34 causes the light source 30 to emit a laser beam with the normal output $P_2$ to the center portion of the modeling area in the (n - 1)-th thin layer and causes the driver 33 to scan the laser beam in a zigzag manner at the normal scan speed $V_2$ and scan line interval $SS_2$.

The order of the laser beam emission and scanning is not limited to this. For example, a laser beam may be emitted to and scanned over the center portion, and then a laser beam may be emitted to and scanned over the projecting portion and the overlapping portion.

Thus, in the modeling area in the (n - 1)-th thin layer as an intermediate layer, the energy density E of the laser beam to be received by the projecting portion and the overlapping portion is the energy density $E_1$, which is higher than the normal energy density $E_2$, and the energy density E of the laser beam to be received by the center portion is the normal energy density $E_2$.

As a result of step S19, for example, the second solidified layer 41a is formed at the modeling area in the second thin layer 41 of the powder material 8 as illustrated in FIG. 17B or the third solidified layer 42a is formed at the modeling area in the third thin layer 42 of the powder material 8 as illustrated in FIG. 18.

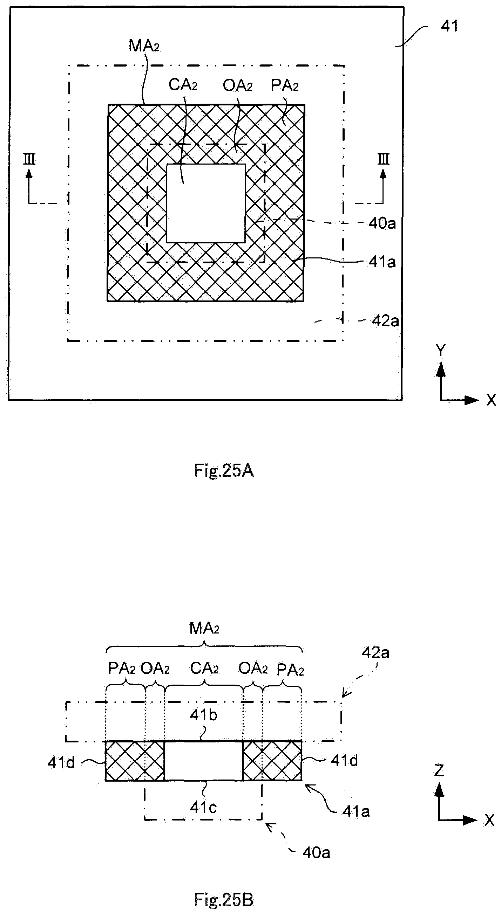

FIG. 25A is a top view illustrating the configuration of the second solidified layer 41a as an example intermediate layer, and FIG. 25B is a cross-sectional view along III-III line in FIG. 25A.

In this FIGS. 25A and 25B, the second solidified layer 41a is indicated by a solid line. Also, as a reference, the first solidified layer 40a formed directly under the solidified layer 41a is indicated by a long dashed short dashed line, and the third solidified layer 42a formed directly on the solidified layer 41a is indicated by a long dashed double-short dashed line.

As illustrated in FIG. 25A, the solidified layer 41a is formed at a modeling area $MA_2$ in the second thin layer 41 as a result of step S19.

In this modeling area $MA_2$, a center portion $CA_2$ illustrated unpatterned in FIGS. 25A and 25B has been irradiated with a laser beam at the normal energy density $E_2$.

On the other hand, a projecting portion $PA_2$ and an overlapping portion $OA_2$ illustrated with mesh in FIGS. 25A and 25B have been irradiated with a laser beam at the energy density $E_1$, which is higher than the normal energy density $E_2$. This has enabled the powder material 8 at the projecting portion $PA_2$ and the overlapping portion $OA_2$ to be strongly fused.

Accordingly, the number of open pores formed in the portions of the surfaces of the solidified layer 41a (an upper surface 41b, a lower surface 41c, and a side surface 41d) at the projecting portion $PA_2$ and the overlapping portion

$OA_2$ can be less than the number of open pores formed in the case where a laser beam is applied at the normal energy density $E_2$.

Further, the number of closed pores formed inside the projecting portion $PA_2$ and the overlapping portion $OA_2$ of the solidified layer 41a can also be less than the number of closed pores formed in the case where a laser beam is applied at the normal energy density $E_2$.

Specifically, the porosity of the projecting portion $PA_2$ and the overlapping portion $OA_2$ of the solidified layer 41a with respect to the pores formed on and in them (open pores and closed pores) can be reduced to a range of 0.1% to 5% and preferably to a range of 0.1% to 1%.

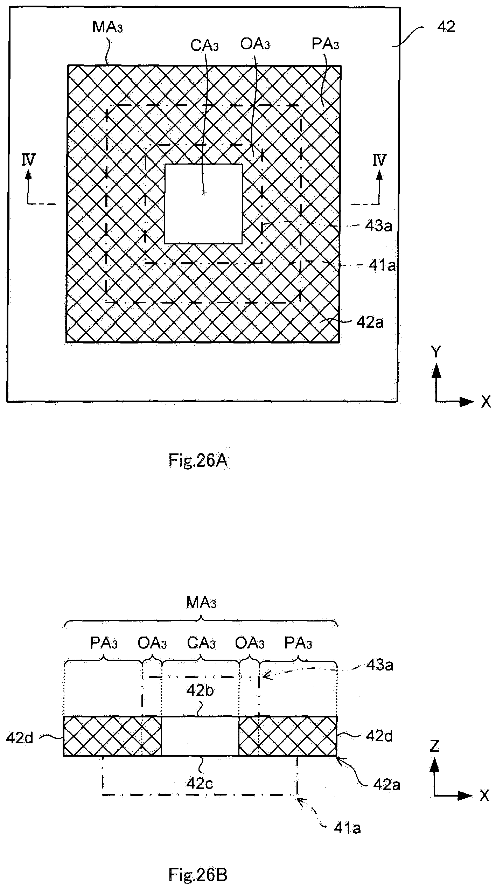

FIG. 26A is a top view illustrating the configuration of the third solidified layer 42a as another example intermediate layer, and FIG. 26B is a cross-sectional view along IV-IV line in FIG. 26A.

In this FIGS. 26A and 26B, the third solidified layer 42a is indicated by a solid line. Also, as a reference, the second solidified layer 41a formed directly under the solidified layer 42a is indicated by a long dashed short dashed line, and the fourth solidified layer 43a formed directly on the solidified layer 42a is indicated by a long dashed double-short dashed line.

As illustrated in FIG. 26A, the solidified layer 42a is formed at a modeling area $MA_3$ in the third thin layer 42 as a result of step S19.

In this modeling area $MA_3$, a center portion $CA_3$ illustrated unpatterned in FIGS. 26A and 26B has been irradiated with a laser beam at the normal energy density $E_2$.

On the other hand, a projecting portion $PA_3$ and an overlapping portion $OA_3$ illustrated with mesh in FIGS. 26A and 26B have been irradiated with a laser beam at the energy density $E_1$, which is higher than the normal energy density $E_2$. This has enabled the powder material 8 at the projecting portion $PA_3$ and the overlapping portion $OA_3$ to be strongly fused.

Accordingly, the number of open pores formed in the portions of the surfaces of the solidified layer 42a (an upper surface 42b, a lower surface 42c, and a side surface 42d) at the projecting portion $PA_3$ and the overlapping portion $OA_3$ can be less than the number of open pores formed in the case where a laser beam is applied at the normal energy density E2.

Further, the number of closed pores formed inside the projecting portion $PA_3$ and the overlapping portion $OA_3$ of the solidified layer 42a can also be less than the number of closed pores formed in the case where a laser beam is applied at the normal energy density $E_2$.

Specifically, the porosity of the projecting portion $PA_3$ and the overlapping portion $OA_3$ of the solidified layer 42a with respect to the pores formed on and in them (open pores and closed pores) can be reduced to a range of 0.1% to 5% and preferably to a range of 0.1% to 1%.

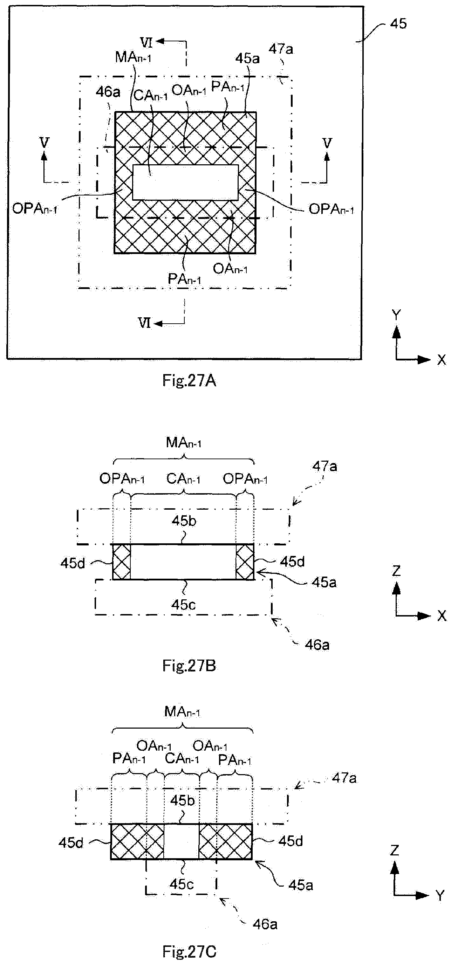

Further, FIG. 27A is a top view illustrating the configuration of the (n - 1)-th solidified layer as an example intermediate layer with projecting portions covering part of its outer peripheral portion. FIG. 27B is a cross-sectional view along V-V line in FIG. 27A, and FIG. 27C is a cross-sectional view along VI-VI line in FIG. 27A.

As illustrated in FIG. 27A, the solidified layer 45a is formed at a modeling area $MA_{n-1}$ in the (n - 1)-th thin layer 45 as a result of step S19.

In this FIGS. 27A to 27C, the (n - 1)-th solidified layer 45a is indicated by a solid line. Also, as a reference, an (n - 2)-th solidified layer 46a formed directly under the solidified layer 45a is indicated by a long dashed short dashed line, and an n-th solidified layer 47a formed directly on the solidified layer 45a is indicated by a long dashed double-short dashed line.

In this modeling area $MA_{n-1}$, a center portion $CA_{n-1}$ illustrated unpatterned in FIGS. 27A to 27C has been irradiated with a laser beam at the normal energy density $E_2$.

On the other hand, an outer peripheral portion $OPA_{n-1}$, projecting portions $PA_{n-1}$, and an overlapping portion $OA_{n-1}$ illustrated with mesh in FIGS. 27A to 27C have been irradiated with a laser beam at the energy density $E_1$, which is higher than the normal energy density $E_2$. This has enabled the powder material 8 at the outer peripheral portion $OPA_{n-1}$, the projecting portions $PA_{n-1}$, and the overlapping portion $OA_{n-1}$ to be strongly fused.

Accordingly, the number of open pores formed in the portions of the surfaces of the solidified layer 45a (an upper surface 45b, a lower surface 45c, and a side surface 45d) at the outer peripheral portion $OPA_{n-1}$, the projecting portions $PA_{n-1}$, and the overlapping portion $OA_{n-1}$ can be less than the number of open pores formed in the case where a laser beam is applied at the normal energy density $E_2$.

Further, the number of closed pores formed inside the outer peripheral portion $OPA_{n-1}$, the projecting portions $PA_{n-1}$, and the overlapping portion $OA_{n-1}$ of the solidified layer 45a can also be less than the number of closed pores formed in the case where a laser beam is applied at the normal energy density $E_2$.

Specifically, the porosity of the outer peripheral portion $OPA_{n-1}$, the projecting portions $PA_{n-1}$, and the overlapping portion $OA_{n-1}$ of the solidified layer 45a with respect to the pores formed on and in them (open pores and closed pores) can be reduced to a range of 0.1% to 5% and preferably to a range of 0.1% to 1%.

Then, proceeding to step S20, the control unit 34 reads the slice data of the n-th layer of the model out of the memory.

Then, proceeding to step S21, the control unit 34 refers to the slice data SD in the memory and determines whether the n-th layer of the model is the uppermost layer.

For example, the control unit 34 determines that the n-th layer of the model is the uppermost layer if finding no slice data of the (n + 1)-th layer in the memory when reading out the slice data of the n-th layer of the model. If, on the other hand, finding the slice data of the (n + 1)-th layer in the memory, the control unit 34 determines that the n-th layer of the model is not the uppermost layer.

The processing is returned to step S15 if determining in step S21 that the n-th layer of the model is not the uppermost layer (NO).

The control unit 34 then recognizes the n-th layer of the model as one of the intermediate layers, and performs the processes of steps S15 to S19 on the modeling area in the n-th thin layer. Subsequently, proceeding to step S20, the control unit 34 reads the slice data of the (n + 1)-th layer of the model out of the memory.

If, on the other hand, determining in step S21 that the n-th layer of the model is the uppermost layer (YES), the processing is proceeded to step S22.

Thereafter, the control unit 34 controls the support rods 9, 10, and 12 and the recoater 14 so as to, for example, form the fourth thin layer 43 of the powder material 8 as the uppermost layer as illustrated in FIG. 18.

In step S22, the control unit 34 controls the laser beam emission unit 29 based on the slice data of the n-th layer as the uppermost layer to thereby apply a laser beam at the energy density $E_1$, which is higher than the normal energy density $E_2$, to the entirety of the modeling area in the n-th thin layer corresponding to the modeling area $ma_n$ in this slice data.

For example, the control unit 34 controls the laser beam emission unit 29 so as to cause the light source 30 to emit a laser beam with the output $P_1$, which is higher than the output $P_2$ for application at the normal energy density $E_2$, to the entire modeling area in the fourth thin layer 43 as the uppermost layer and so as to cause the driver 33 to scan the laser beam in a zigzag manner at the scan speed $V_1$ and the scan line interval $SS_1$, which are equal to the scan speed $V_2$ and the scan line interval $SS_2$ for application at the normal energy density $E_2$.

Thus, the energy density E of the laser beam to be received by the entire modeling area in the fourth thin layer 43 is the energy density $E_1$ higher than the normal energy density $E_2$.

As a result of step S22, for example, the fourth solidified layer 43a is formed at the modeling area in the fourth thin layer 43 of the powder material 8, as illustrated in FIG. 18.

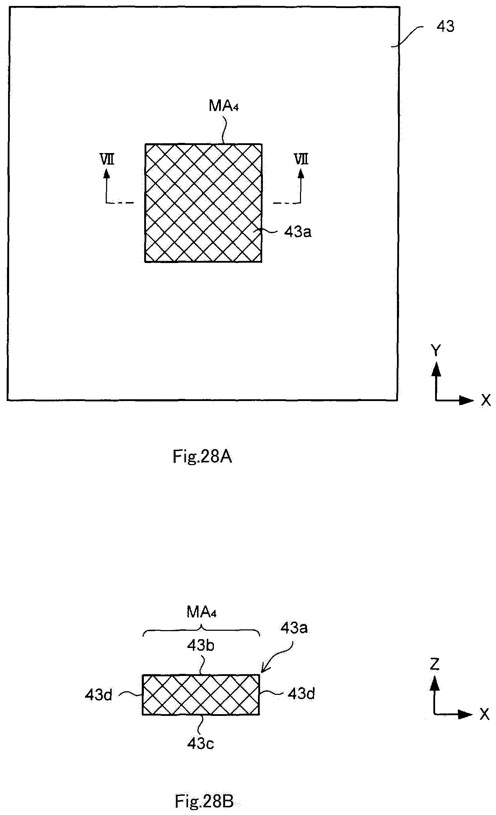

FIG. 28A is a top view illustrating the configuration of the fourth solidified layer 43a, and FIG. 28B is a cross-sectional view along VII-VII line in FIG. 28A.

As illustrated in FIG. 28A, the solidified layer 43a is formed at a modeling area $MA_4$ in the fourth thin layer 43, which is the uppermost layer, as a result of step S22.

The entire modeling area $MA_4$ illustrated with dots in FIGS. 28A and 28B has been irradiated with a laser beam at the energy density $E_1$, which is higher than the normal energy density $E_2$. This has enabled the powder material 8 at the modeling area $MA_4$ to be strongly fused.

Accordingly, the number of open pores formed in the surfaces of the solidified layer 43a (an upper surface 43b, a lower surface 43c, and a side surface 43d) can be less than the number of open pores formed in the case where a laser beam is applied at the normal energy density $E_2$.

Further, the number of closed pores formed inside the solidified layer 43a can also be less than the number of closed pores formed in the case where a laser beam is applied at the normal energy density $E_2$.

Specifically, the porosity of the solidified layer 43a with respect to the pores formed on and in it (open pores and closed pores) can be reduced to a range of 0.1% to 5% and preferably to a range of 0.1% to 1%.

Also, the formation of the solidified layer 43a completes the model 44 formed of the first (lowermost) solidified layer 40a, the second (intermediate) solidified layer 41a, the third (intermediate) solidified layer 42a, and the fourth (uppermost) solidified layer 43a, as illustrated in FIG. 18.

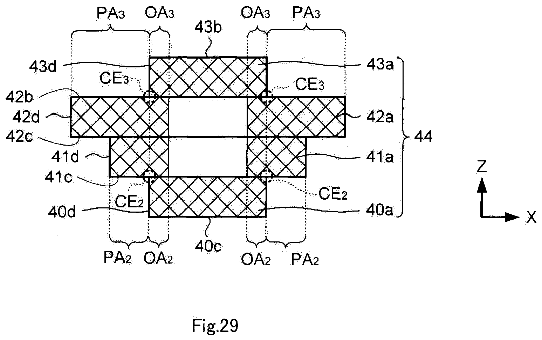

FIG. 29 is a diagram illustrating a cross-sectional structure of the powder bed fusion model (model 44) according to the present embodiment along the height direction (Z direction).

As illustrated with mesh in FIG. 29, in the model 44, the entire lowermost solidified layer 40a, the projecting portions $PA_2$ and $PA_3$ of the intermediate solidified layers 41a and 42a, and the entire uppermost solidified layer 43a have been strongly fused and solidified by a laser beam at the energy density $E_1$, which is higher than the normal energy density $E_2$.

Thus, the number of open pores formed in the entirety of the atmospherically exposed surfaces of the lowermost solidified layer 40a (the lower surface 40c and the side surface 40d), the portions of the atmospherically exposed surfaces of the intermediate solidified layer 41a (the lower surface 41c and the side surface 41d) at the projecting portion $PA_2$, the portions of the atmospherically exposed surfaces of likewise the intermediate solidified layer 42a (the upper surface 42b, the lower surface 42c, and the side surface 42d) at the projecting portion $PA_3$, and the entirety of the atmospherically exposed surfaces of the uppermost solidified layer 43a (the upper surface 43b and the side surface 43d), i.e., the entire surfaces of the model 44, can be less than the number of open pores formed in the case where the entire solidified layers 40a to 43a are fused and solidified by a laser beam at the normal energy density $E_2$.

Further, as illustrated with mesh in FIG. 29, in the intermediate solidified layers 41a and 42a, the overlapping portions $OA_2$ and $OA_3$ on the inner side of the projecting portions $PA_2$ and $PA_3$ have been strongly fused and solidified by a laser beam at the energy density $E_1$, which is higher than the normal energy density $E_2$.

Thus, the overlapping portions $OA_2$ and $OA_3$ can serve as margins for the projecting portions $PA_2$ and $PA_3$ and suppress formation of open pores at the portion of a surface of the solidified layer 41a that may be exposed to the atmosphere (lower surface 41c) at an end $CE_2$ of the projecting portion $PA_2$ on the center portion $CA_2$ side and at the portion of such a surface of the solidified layer 42a (upper surface 42b) at an end $CE_3$ of the projecting portion $PA_3$ on the center portion $CA_3$ side.

Meanwhile, the end $CE_2$ of the projecting portion $PA_2$ is a portion where a step is formed from the solidified layer 41a to the solidified layer 40a directly under it, and the end $CE_3$ of the projecting portion $PA_3$ is a portion where a step is formed from the solidified layer 42a to the solidified layer 43a directly on it. When a stress is applied to the model 44, the stress gets concentrated at these ends $CE_2$ and $CE_3$, and thus, they may be starting points of deformation of the solidified layers 40a to 43a or detachment of the solidified layers 40a to 43a.

Portions around such ends $CE_2$ and $CE_3$ can be reinforced by the strongly fused and solidified overlapping portions $OA_2$ and $OA_3$.

After performing the process of step S22, the control unit 34 terminates the process of adjusting the energy density E of the laser beam.

If, on the other hand, determining in step S17 that a projecting portion $pa_{n-1}$ is not present in the modeling area $ma_{n-1}$ in the slice data $SD_{n-1}$ of the (n - 1)-th layer as an intermediate layer (NO), the processing is proceeded step S25, as mentioned earlier.

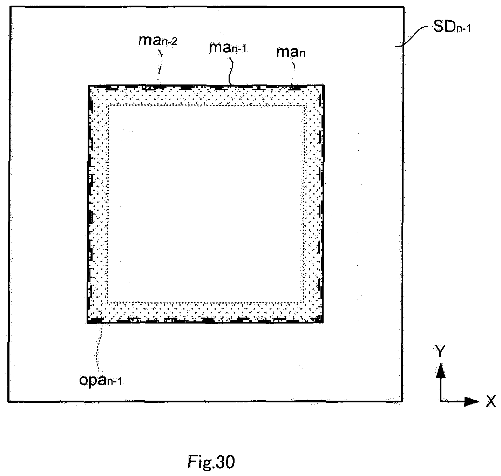

FIG. 30 is a diagram explaining the configuration of the slice data $SD_{n-1}$ of the (n - 1)-th layer as an example intermediate layer without a projecting portion $pa_{n-1}$ in the modeling area $ma_{n-1}$ in a state where the slice data of the (n - 2)-th layer directly under the (n - 1)-th layer and the slice data of the n-th layer directly on the (n - 1)-th layer are superimposed on the slice data $SD_{n-1}$.

In this FIG. 30, the modeling area $ma_{n-1}$ in the slice data $SD_{n-1}$ of the (n - 1)-th layer is indicated by a solid line. On the other hand, the modeling area $ma_{n-2}$ in the slice data of the (n - 2)-th layer is indicated by a long dashed short dashed line, and the modeling area $ma_n$ in the slice data of the n-th layer is indicated by a long dashed double-short dashed line.

As illustrated in FIG. 30, the modeling area $ma_{n-1}$ in the (n - 1)-th layer is the same size as the modeling area $ma_{n-2}$ in the (n - 2)-th layer directly under it and also is the same size as the modeling area $ma_n$ in the n-th layer directly on it. Thus, the modeling area $ma_{n-1}$ in the (n - 1)-th layer has neither a portion projecting outward from the modeling area $ma_{n-2}$ in the (n - 2)-th layer when viewed from below nor a portion projecting outward from the modeling area $ma_n$ in the n-th layer when viewed from above.

Accordingly, in the example of FIG. 30, the control unit 34 extracts only the outer peripheral portion $opa_{n-1}$ of the modeling area $ma_{n-1}$ in the (n - 1)-th layer (the dotted portion in FIG. 30) as a result of performing the processes of steps S15 and S16.

Then, in step S17, the control unit 34 determines that a projecting portion $pa_{n-1}$ is not present in the modeling area $ma_{n-1}$, and proceeds to step S25.

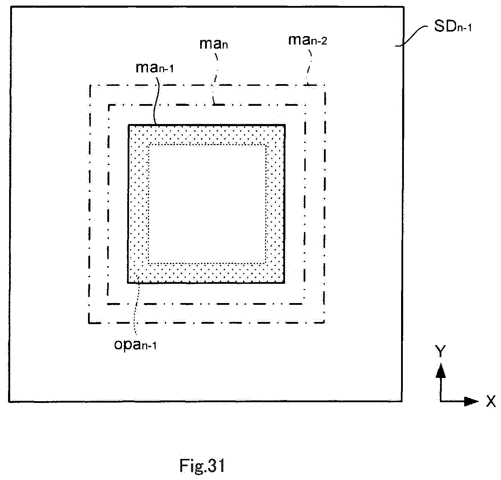

Meanwhile, FIG. 31 is a diagram explaining the configuration of the slice data $SD_{n-1}$ of the (n - 1)-th layer as another example intermediate layer without a projecting portion $pa_{n-1}$ in the modeling area $ma_{n-1}$ in a state where the slice data of the (n - 2)-th layer directly under the (n - 1)-th layer and the slice data of the n-th layer directly on the (n - 1)-th layer are superimposed on the slice data $SD_{n-1}$.

In this FIG. 31, the modeling area $ma_{n-1}$ in the slice data $SD_{n-1}$ of the (n - 1)-th layer is indicated by a solid line. On the other hand, the modeling area $ma_{n-2}$ in the slice data of the (n - 2)-th layer is indicated by a long dashed short dashed line, and the modeling area $ma_n$ in the slice data of the n-th layer is indicated by a long dashed double-short dashed line.

As illustrated in FIG. 31, the modeling area $ma_{n-1}$ in the (n-1)-th layer is smaller than the modeling area $ma_{n-2}$ in the (n - 2)-th layer directly under it and also is smaller than the modeling area $ma_n$ in the n-th layer directly on it. Thus, the modeling area $ma_{n-1}$ in the (n - 1)-th layer has neither a portion projecting outward from the modeling area $ma_{n-2}$ in the (n - 2)-th layer when viewed from below nor a portion projecting outward from the modeling area $ma_n$ in the n-th layer when viewed from above.

Accordingly, in the example of FIG. 31, the control unit 34 extracts only the outer peripheral portion $opa_{n-1}$ of the modeling area $ma_{n-1}$ in the (n - 1)-th layer (the dotted portion in FIG. 31) as a result of performing the processes of steps S15 and S16.

Then, in step S17, the control unit 34 determines that a projecting portion $pa_{n-1}$ is not present in the modeling area $ma_n$ and proceeds to step S25.

As illustrated in FIG. 20, in this step S25, the control unit 34 controls the laser beam emission unit 29 based on the slice data $SD_{n-1}$ of the (n - 1)-th layer as an intermediate layer such that in the modeling area in the (n - 1)-th thin layer corresponding to the modeling area $ma_{n-1}$ in this slice data $SD_{n-1}$, a laser beam is applied at the energy density $E_1$, which is higher than the normal energy density $E_2$, to the portion corresponding to the outer peripheral portion $opa_{n-1}$ (outer peripheral portion) and a laser beam is applied at the normal energy density $E_2$ to the portion corresponding to the portion on the inner side of the outer peripheral portion $opa_{n-1}$ (center portion).

For example, the control unit 34 controls the laser beam emission unit 29 so as to cause the light source 30 to emit a laser beam with the output $P_1$, which is higher than the output (normal output) $P_2$ for application at the normal energy density $E_2$, to the outer peripheral portion of the modeling area in the (n - 1)-th thin layer, and so as to cause the driver 33 to scan the laser beam in a zigzag manner at the scan speed $V_1$ and the scan line interval $SS_1$, which are equal to the scan speed (normal scan speed) $V_2$ and the scan line interval (normal scan line interval) $SS_2$ for application at the normal energy density $E_2$.

Subsequently, the control unit 34 causes the light source 30 to emit a laser beam with the normal output $P_2$ to the center portion of the modeling area in the (n - 1)-th thin layer and causes the driver 33 to scan the laser beam in a zigzag manner at the normal scan speed $V_2$ and scan line interval $SS_2$.

The order of the laser beam emission and scanning is not limited to this. For example, a laser beam may be emitted to and scanned over the center portion, and then a laser beam may be emitted to and scanned over the outer peripheral portion.

Thus, in the modeling area in the (n - 1)-th thin layer as an intermediate layer, the energy density E of the laser beam to be received by the outer peripheral portion is the energy density $E_1$, which is higher than the normal energy density $E_2$, and the energy density E of the laser beam to be received by the center portion on the inner side of the outer peripheral portion is the normal energy density $E_2$.

As a result of step S25, the (n - 1)-th solidified layer is formed at the modeling area in the (n - 1)-th thin layer.

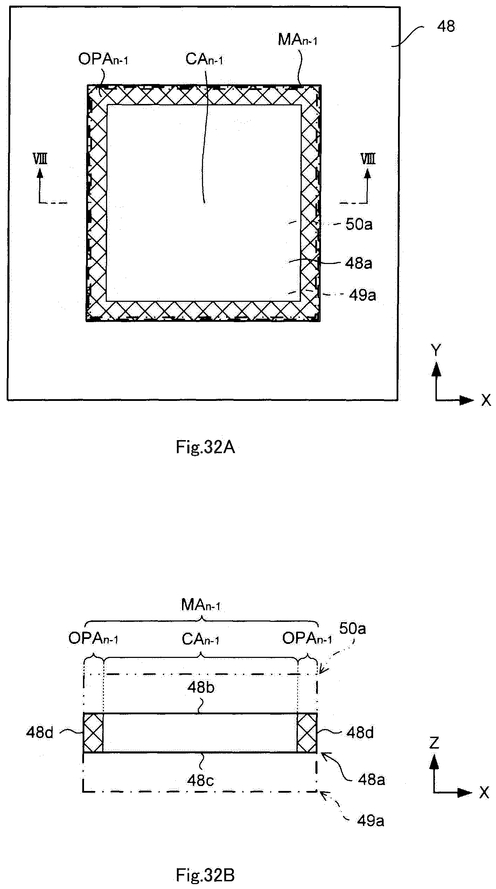

FIG. 32A is a top view illustrating the configuration of the (n - 1)-th solidified layer as an example intermediate layer without a projecting portion in its modeling area, and FIG. 32B is a cross-sectional view along VIII-VIII line in FIG. 32A.

As illustrated in FIG. 32A, a solidified layer 48a is formed at the modeling area $MA_{n-1}$ in an (n - 1)-th thin layer 48 being an intermediate layer as a result of step S25.

In this FIGS. 32A and 32B, the (n - 1)-th solidified layer 48a is indicated by a solid line. Also, as a reference, an (n - 2)-th solidified layer 49a formed directly under the solidified layer 48a is indicated by a long dashed short dashed line, and an n-th solidified layer 50a formed directly on the solidified layer 48a is indicated by a long dashed double-short dashed line.

In the modeling area $MA_{n-1}$ in the (n - 1)-th thin layer 48, the center portion $CA_{n-1}$ illustrated unpatterned in FIGS. 32A and 32B has been irradiated with a laser beam at the normal energy density $E_2$.

The modeling area $OPA_{n-1}$ illustrated with mesh in FIGS. 32A and 32B, on the other hand, has been irradiated with a laser beam at the energy density $E_1$, which is higher than the normal energy density $E_2$. This has enabled the powder material 8 at the outer peripheral portion $OPA_{n-1}$ to be strongly fused.

Accordingly, the number of open pores formed in the portions of the surfaces of the solidified layer 48a (an upper surface 48b, a lower surface 48c, and a side surface 48d) at the outer peripheral portion $OPA_{n-1}$ can be less than the number of open pores formed in the case where a laser beam is applied at the normal energy density $E_2$.

Further, the number of closed pores formed inside the outer peripheral portion $OPA_{n-1}$ of the solidified layer 48a can also be less than the number of closed pores formed in the case where a laser beam is applied at the normal energy density $E_2$.

Specifically, the porosity of the outer peripheral portion $OPA_{n-1}$ of the solidified layer 48a with respect to the pores formed on and in it (open pores and closed pores) can be reduced to a range of 0.1% to 5% and preferably to a range of 0.1% to 1%.

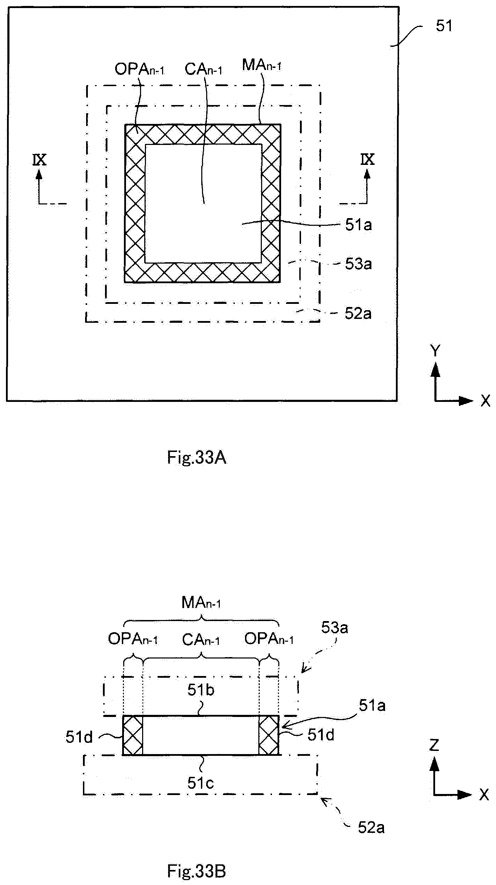

FIG. 33A is a top view illustrating the configuration of the (n - 1)-th solidified layer as another example intermediate layer without a projecting portion in its modeling area, and FIG. 33B is a cross-sectional view along IX-IX line in FIG. 33A.

As illustrated in FIG. 33A, a solidified layer 51a is formed at the modeling area $MA_{n-1}$ in an (n - 1)-th thin layer 51 being an intermediate layer as a result of step S25.

In this FIGS. 33A and 33B, the (n - 1)-th solidified layer 51a is indicated by a solid line. Also, as a reference, an (n - 2)-th solidified layer 52a formed directly under the solidified layer 51a is indicated by a long dashed short dashed line, and an n-th solidified layer 53a formed directly on the solidified layer 51a is indicated by a long dashed double-short dashed line.

In the modeling area $MA_{n-1}$ in the (n - 1)-th thin layer 51, the center portion $CA_{n-1}$ illustrated unpatterned in FIGS. 33A and 33B has been irradiated with a laser beam at the normal energy density $E_2$.

The modeling area $OPA_{n-1}$ illustrated with mesh in FIGS. 33A and 33B, on the other hand, has been irradiated with a laser beam at the energy density $E_1$, which is higher than the normal energy density $E_2$. This has enabled the powder material 8 at the outer peripheral portion $OPA_{n-1}$ to be strongly fused.

Accordingly, the number of open pores formed in the portions of the surfaces of the solidified layer 51a (an upper surface 51b, a lower surface 51c, and a side surface 51d) at the outer peripheral portion $OPA_{n-1}$ can be less than the number of open pores formed in the case where a laser beam is applied at the normal energy density $E_2$.

Further, the number of closed pores formed inside the outer peripheral portion $OPA_{n-1}$ of the solidified layer 51a can also be less than the number of closed pores formed in the case where a laser beam is applied at the normal energy density $E_2$.

Specifically, the porosity of the outer peripheral portion $OPA_{n-1}$ of the solidified layer 51 a with respect to the pores formed on and in it (open pores and closed pores) can be reduced to a range of 0.1% to 5% and preferably to a range of 0.1% to 1%.

After performing the process of step S25 as above, the processing is proceeded to step S20 described earlier.

As described above, in the present embodiment, when a laser beam is applied to the modeling areas $MA_1$ to $MA_4$ in the thin layers 40 to 43 of the powder material 8, a laser beam is applied at the energy density $E_1$, which is higher than the normal energy density $E_2$, to the entire modeling area $MA_1$ in the first (lowermost) thin layer 40 from the bottom, a laser beam is applied at the higher energy density $E_1$ to the projecting portions $PA_2$ and $PA_3$ and the overlapping portions $OA_2$ and $OA_3$ of the modeling areas $MA_2$ and $MA_3$ in the second and third thin layers 41 and 42 (both are intermediate layers) and a laser beam is applied at the normal energy density $E_2$ to the center portions $CA_2$ and $CA_3$, and a laser beam is applied at the higher energy density $E_1$ to the entire modeling area $MA_4$ in the fourth (uppermost) thin layer 43.

For this reason, the powder material 8 at the entire modeling area $MA_1$ in the lowermost thin layer 40, the projecting portions $PA_2$ and $PA_3$ and the overlapping portions $OA_2$ and $OA_3$ of the modeling areas $MA_2$ and $MA_3$ in the intermediate thin layers 41 and 42, and the entire modeling area $MA_4$ in the uppermost thin layer 43 can be strongly fused.

Thus, the number of open pores formed in the entirety of the atmospherically exposed surfaces of the lowermost solidified layer 40a, the portions of the atmospherically exposed surfaces of the intermediate solidified layers 41a and 42a at the projecting portions $PA_2$ and $PA_3$, and the entirety of the atmospherically exposed surfaces of the uppermost solidified layer 43a, i.e., the entire surfaces of the model 44, can be less than the number of open pores formed in the case where a laser beam is applied at the normal energy density $E_2$ to the entire solidified layers 40a to 43a.

Further, the overlapping portions $OA_2$ and $OA_3$ can serve as margins for the projecting portions $PA_2$ and $PA_3$ and suppress formation of open pores at the portion of a surface of the solidified layer 41a that may be exposed to the atmosphere at the end $CE_2$ of the projecting portion $PA_2$ on the center portion $CA_2$ side and at the portion of such a surface of the solidified layer 42a at the end $CE_3$ of the projecting portion $PA_3$ on the center portion $CA_3$ side.

This makes it possible to prevent the model 44 from easily breaking from open pores when a stress is applied to the model 44 due to concentration of the stress at these open pores, and thus improve the toughness (strength) of the model.

Also, with the strongly fused and solidified overlapping portions $OA_2$ and $OA_3$, it is possible to reinforce a portion around the end $CE_2$ of the projecting portion $PA_2$ on the center portion $CA_2$ side, at which a step is formed from the intermediate solidified layer 41a to the solidified layer 40a directly under it, and to reinforce a portion around the end $CE_3$ of the projecting portion $PA_3$ on the center portion $CA_3$ side, at which a step is formed from the intermediate solidified layer 42a to the solidified layer 43a directly on it.

This makes it possible to suppress deformation of the solidified layers 40a to 43a or detachment of the solidified layers 40a to 43a even when a stress is applied to the model 44 and concentrated at these ends $CE_2$ and $CE_3$, and thus to improve the strength of the model.

Meanwhile, for the application of a laser beam to the modeling areas $MA_1$ to $MA_4$ in the thin layers 40 to 43 of the powder material 8, one may consider, unlike the fabrication method of the present embodiment, applying a laser beam at the energy density $E_1$, which is higher than the normal energy density $E_2$, to the outer peripheral portions of the modeling areas $MA_1$ to $MA_4$ and applying a laser beam at the normal energy density $E_2$ to the center portions on the inner side of the outer peripheral portions to fabricate the model.

The structure of a model obtained by applying a laser beam in such a manner will be described as a comparative example.

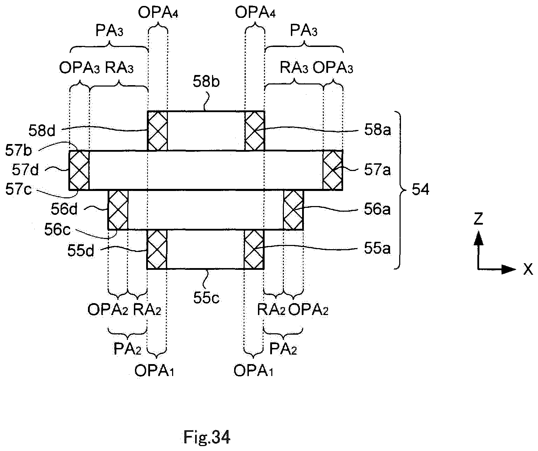

FIG. 34 is a diagram illustrating a cross-sectional structure of the model according to the comparative example along the height direction (Z direction).

As illustrated in FIG. 34, a model 54 according to the comparative example consists of solidified layers 55a to 58a having the same sizes and shapes as the solidified layers 40a to 43a of the model 44 according to the present embodiment illustrated in FIG. 29.

In the model 54, however, as illustrated with mesh in FIG. 34, an outer peripheral portion $OPA_1$ of the lowermost solidified layer 55a, outer peripheral portions $OPA_2$ and $OPA_3$ of the intermediate solidified layers 56a and 57a, and an outer peripheral portion $OPA_4$ of the uppermost solidified layer 58a have been strongly fused and solidified by a laser beam at the energy density $E_1$, which is higher than the normal energy density $E_2$.

For this reason, the model 54 according to the comparative example can only reduce the number of open pores formed in the portions of the atmospherically exposed surfaces of the lowermost solidified layer 55a (a lower surface 55c and a side surface 55d) at the outer peripheral portion $OPA_1$ and the portions of the atmospherically exposed surfaces of the uppermost solidified layer 58a (an upper surface 58c and a side surface 58d) at the outer peripheral portion $OPA_4$.

In contrast, the model 44 according to the present embodiment can reduce the number of open pores formed in the entirety of the surfaces of the lowermost solidified layer 40a (the lower surface 40c and the side surface 40d) and the entirety of the surfaces of the uppermost solidified layer 43a (the upper surface 43c and the side surface 43d).

Also, although the model 54 according to the comparative example can reduce the number of open pores formed in the portions of the atmospherically exposed surfaces of the intermediate solidified layer 56a (a lower surface 56c and a side surface 56d) at the outer peripheral portion $OPA_2$ and likewise in the portions of the atmospherically exposed surfaces of the intermediate solidified layer 57a (an upper surface 57b, a lower surface 57c, and a side surface 57d) at the outer peripheral portion $OPA_3$, it cannot reduce the number of open pores formed in remaining portions $RA_2$ and $RA_3$ of the projecting portions $PA_2$ and $PA_3$ excluding the outer peripheral portions $OPA_2$ and $OPA_3$.

In contrast, the model 44 according to the present embodiment can reduce the number of open pores formed in the portions of the surfaces of the intermediate solidified layer 41a (the lower surface 41c and the side surface 41d) at the projecting portion $PA_2$ including the above-mentioned remaining portion and likewise in the portions of the surfaces of the intermediate layer 42a (the upper surface 42b, the lower surface 42c, and the side surface 42d) at the projecting portion $PA_3$ including the remaining portion.

Thus, for fabrication of a model with high toughness (strength), it is effective to detect the portions that will be the surfaces of the model and apply a laser beam at the energy density $E_1$, which is higher than the normal energy density $E_2$, to these portions as in the present embodiment, instead of simply applying a laser beam at the higher energy density $E_1$ to the outer peripheral portions of the modeling areas in the plurality of thin layers as in the comparative example.

In the present embodiment described above, based on the equation (1), the control unit 34 causes the light source 30 to emit a laser beam with the output $P_1$, which is higher than the output $P_2$ for application at the normal energy density $E_2$, so as to set the energy density E of the laser beam to be received by the modeling area in a thin layer of the powder material 8 at the energy density $E_1$, which is higher than the normal energy density $E_2$. However, the method of raising the energy density E of the laser beam is not limited to this.

For example, the control unit 34 may set the energy density E of the laser beam to be received by the modeling area in a thin layer of the powder material 8 at the energy density $E_1$, which is higher than the normal energy density $E_2$, by causing the driver 33 to scan a laser beam at a scan speed $V_1$ lower than the scan speed $V_2$ for application at the normal energy density $E_2$ or scan a laser beam at a scan line interval $SS_1$ shorter than the scan line interval $SS_2$ for application at the normal energy density $E_2$.

Alternatively, the control unit 34 may set the energy density E of the laser beam to be received by the modeling area in a thin layer of the powder material 8 at the energy density $E_1$, which is higher than the normal energy density $E_2$, by, for example, changing two or more of the parameters of the energy density E (the laser beam output P, scan speed V, and scan line interval SS) such that the laser beam output P will be slightly low and the scan speed V will be significantly low.

Also, in the present embodiment, the energy density E of the laser beam to be received by the projecting portion and the overlapping portion of the modeling area in each intermediate thin layer is the energy density $E_1$, which is higher than the normal energy density $E_2$, in a single zigzag scan, but may be so in two zigzag scans.

For example, the control unit 34 may control the laser beam emission unit 29 to apply a laser beam at the normal energy density E2 to the entire modeling area of each intermediate thin layer including the projecting portion and the overlapping portion in the first zigzag scan and apply a laser beam at an energy density $E_3$ lower than the normal energy density $E_2$ only to the projecting portion and the overlapping portion in the second zigzag scan such that the total energy density E of the laser beams received by the projecting portion and the overlapping portion (= $E_2$ + $E_3$) will be the energy density $E_1$, which is higher than the normal energy density $E_2$.

In this case, the energy density $E_3$ is set to be 0.2 to 1 times higher than the energy density $E_2$.

Furthermore, in the present embodiment, the control unit 34 uses a zigzag scanning method to scan a laser beam over both the projecting portion and overlapping portion and the center portion of the modeling area in each intermediate thin layer, but the combination of laser beam scanning methods is not limited to this.

For example, the control unit 34 may scan a laser beam over the center portion by a zigzag scanning method, and scan a laser beam over the projecting portion and the overlapping portion by a scanning method that can make the scan time shorter than the zigzag scanning method, e.g., the above-mentioned raster scanning method, in which scan lines sc extending in the same direction are disposed parallel to each other, or the above-mentioned scanning method in which scan lines sc are disposed in a spiral pattern along the outer edge line ol, according to the shapes and sizes of these portions.

(Second Embodiment)

In the first embodiment, for the application of a laser beam to the modeling areas in n thin layers of a powder material, a laser beam is applied at the energy density $E_1$, which is higher than the normal energy density $E_2$, to the entire modeling area in the lowermost thin layer, the projecting portions and the overlapping portions of the modeling areas in the intermediate thin layers, and the entire modeling area in the uppermost thin layer among the n thin layers of the powder material to fabricate a model. This reduces the number of open pores and closed pores formed on and in the lowermost solidifed layer, the projecting portions and the overlapping portions of the intermediate solidified layers, and the uppermost solidified layer among the n solidified layers forming the model.

In the first embodiment, however, since a laser beam is applied at the normal energy density $E_2$ to the center portion on the inner side of the projecting portion and the overlapping portion of the modeling area in each intermediate thin layer, the number of open pores and closed pores formed on and in the center portion of each intermediate solidified layer is not reduced.

Thus, in the present embodiment, the number of pores formed on and in the center portion of each intermediate solidified layer is reduced as below.

First, a model fabricated by the fabrication method of the first embodiment described above (e.g., the model 44) is taken out of the layers of the powder material in the fabrication container of the powder bed fusion apparatus (see FIG. 18). Thereafter, the model is placed in a liquid such as water at normal temperature (e.g., 20°C) inside the pressure vessel of a cold isostatic press manufactured by NIKKISO CO., LTD., for example, and isostatically pressurized at a pressure of about 100 MPa. Such a pressurizing method is also called a CIP (Cold Isostatic Press) method. As a result, the model is evenly compressed such that open pores and closed pores formed on and in the center portion of each intermediate solidified layer in the model are crushed or, even if these pores are not completely crushed, they become smaller. This makes it possible to reduce the number of pores formed on and in the center portion of each intermediate solidified layer.

Specifically, the porosity of the center portion of each intermediate solidified layer with respect to the pores formed on and in it (open pores and closed pores) can be reduced to a range of 0.1% to 5% and preferably to a range of 0.1% to 1%. In other words, the range of this porosity can be equal to the range of the porosity of the lowermost solidified layer, the projecting portion and the overlapping portion of each intermediate solidified layer, and the uppermost solidified layer with respect to the pores formed on and in them.

The compressed model is then taken out of the cold isostatic press.

In the present embodiment, a model fabricated by the fabrication method of the first embodiment is isostatically pressurized by the CIP method. In this way, it is possible to reduce the number of pores formed in the center portion of each intermediate solidified layer in the model while maintaining the shape of the model.

This makes it possible to prevent a model from easily breaking from pores formed on and in the center portion of an intermediate solidified layer when a stress is applied to the model due to concentration of the stress at these pores, and thus further improve the toughness (strength) of the model. Accordingly, it is possible to obtain strength close to that of a model fabricated by an injection molding apparatus.

Note that in the present embodiment, a model is compressed by means of pressurization. For this reason, it is necessary to prepare a model fabricated by the fabrication method of the first embodiment to be larger than the designed dimensions such that the compressed model will have the designed dimensions. How much larger the model is to be fabricated than the designed dimensions is determined according to the type (hardness) of the powder material.

Meanwhile, in the present embodiment, when a model is isostatically pressurized by the CIP method, the liquid in the pressure vessel enters the open pores to apply pressure to the model from the inside of the open pores. Hence, the number of open pore does not decrease. For this reason, it is advantageous to prepare a model fabricated by the fabrication method of the first embodiment, i.e., a model with a reduced number of open pores.

Also, in the present embodiment, when a model is isostatically pressurized by the CIP method, the pressure may deform the model. For this reason, it is advantageous to prepare a model fabricated by the fabrication method of the first embodiment, i.e., a model in which each intermediate solidified layer has an overlapping portion reinforcing a portion around the end of the projecting portion on the center portion side.

Although a model is isostatically pressurized by the CIP method in the present embodiment described above, the model pressurizing method is not limited to this. For example, a WIP (Warm Isostatic Press) method in which the model is isostatically pressurized by using water at about 90°C or oil at about 120°C depending on the material of the model may be employed as the model pressurizing method.

[Reference Signs List]

| | |
|---|---|
| 1 | powder bed fusion apparatus |
| 2 | housing |
| 3, 4 | storage container |
| 5 | fabrication container |
| 6, 7 | supply table |
| 8 | powder material |
| 9, 10, 12 | support rod |
| 11 | modeling table |
| 13 | carrying plate |
| 13a | upper surface of carrying plate |
| 13c to 13e | through-hole of carrying plate |
| 14 | recoater |
| 15 to 17 | upper heating unit |
| 18, 19 | reflection plate |
| 20 to 27 | heater |
| 28 | temperature detection unit |
| 29 | laser beam emission unit |
| 30 | light source |
| 31 | mirror |
| 31a | X mirror |
| 31b | Y mirror |
| 32 | lens |
| 33 | driver for mirrors and lens |
| 34 | control unit |
| 35 to 38, 40 to 43, 45, 48, 51 | thin layer of powder material |
| 39 | buffer layer of powder material |
| 40a to 43a, 45a to 53a, 55a to 58a | solidified layer |
| 40b to 43b, 45b, 48b, 51b, 58b, 100a | upper surface of solidified layer |
| 40c to 43c, 45c, 48c, 51c, 55c to 57c, 100b | lower surface of solidified layer |
| 40d to 43d, 45d, 48d, 51d, 55d to 58d, 100c | side surface of solidified layer |
| 44, 54, 100 | model |
| OP | open pore |
| CP | closed pore |
| $SD_1$ to $SD_4$, $SD_{n-1}$ | slice data |
| $ma_1$ to $ma_4$, $ma_{n-2}$, $ma_{n-1}$, $ma_n$ | modeling area in slice data |
| ol outer | edge line around modeling area in slice data |
| $sc_1$ to $sc_{13}$ | scan line |
| $opa_2$, $opa_3$, $opa_{n-1}$ | outer peripheral portion of modeling area in slice data |
| $pa_2$, $pa_3$, $pa_{n-1}$ | projecting portion of modeling area in slice data |
| $oa_2$, $oa_3$, $oa_{n-1}$ | overlapping portion of modeling area in slice data |
| $MA_1$ to $MA_4$, $MA_{n-1}$ | modeling area in thin layer of powder material |
| $OPA_2$, $OPA_3$, $OPA_{n-1}$ | outer peripheral portion of modeling area in thin layer |
| $PA_2$, $PA_3$, $PA_{n-1}$ | projecting portion of modeling area in thin layer |
| $OA_2$, $OA_3$, $OA_{n-1}$ | overlapping portion of modeling area in thin layer |
| $CA_2$, $CA_3$, $CA_{n-1}$ | center portion of modeling area in thin layer |
| $CE_2$, $CE_3$ | end of projecting portion on center portion side |
| $RA_2$, $RA_3$ | remaining portion of modeling area in thin layer |

**Claims**

1. A powder bed fusion model (44) in which n (n is an integer of 3 or more) resin solidified layers (40a, 41a, 42a and 43a) are laminated, wherein

   among the n solidified layers, the first solidified layer (40a) from a bottom has been fused and solidified with a first energy,
   in each of the second to (n - 1)-th solidified layers (41a, 42a), a projecting portion ($PA_2$, $PA_3$, $PA_{n-1}$) projecting outward from at least one of the vertically adjacent solidified layers, and an overlapping portion ($OA_2$, $OA_3$,

$OA_{n-1}$) overlapping the adjacent solidified layers, lying on an inner side of the projecting portion, and having at least a width equal to a thickness of the solidified layer have been fused and solidified with the first energy, and a center portion on an inner side of the projecting portion and the overlapping portion has been fused and solidified with a second energy lower than the first energy, and

the n-th solidified layer (43a) has been fused and solidified with the first energy.

2. The powder bed fusion model according to claim 1, wherein

each of the second to (n - 1)-th solidified layers has an outer peripheral portion ($OPA_2$, $OPA_3$, $OPA_{n-1}$) with a predetermined width, and

when the projecting portion ($PA_2$, $PA_3$, $PA_{n-1}$) covers part of the outer peripheral portion, part of the outer peripheral portion not covered by the projecting portion has been fused and solidified with the first energy along with the projecting portion and the overlapping portion.

3. The powder bed fusion model according to claim 1 or 2, wherein a range of porosity in the center portions of the second to (n - 1)-th solidified layers is equal to a range of porosity in the first solidified layer (40a), the projecting portions and the overlapping portions of the second to (n - 1)-th solidified layers (41a, 42a), and the n-th solidified layer (43a).

4. A powder bed fusion model fabrication method of fabricating a model (44) by repeating a step of forming a layer of resin powder (8) and, after the formation of the layer of the resin powder, a step of applying a laser beam to a modeling area ($ma_1$ to $ma_4$, $ma_{n-2}$, $ma_{n-1}$, $ma_n$) in the layer of the resin powder to fuse the resin powder at the modeling area and solidifying the resin powder to form a solidified layer, to thereby form n (n is an integer of 3 or more) layers of the resin powder and laminate n solidified layers in the n layers of the resin powder, wherein the step of applying a laser beam to a layer of the resin powder includes:

applying the laser beam with a first energy to the modeling area (mai) in the first layer of the resin powder from a bottom among the n layers of the resin powder,

in the modeling area ($ma_2$, $ma_3$, $ma_{n-2}$, $ma_{n-1}$) in each of the second to (n - 1)-th layers of the resin powder, applying the laser beam with the first energy to a projecting portion ($PA_2$, $PA_3$, $PA_{n-1}$) projecting outward from at least one of the modeling areas in the vertically adjacent layers of the resin powder and to an overlapping portion ($OA_2$, $OA_3$, $OA_{n-1}$) overlapping the modeling areas in the adjacent layers of the resin powder, lying on an inner side of the projecting portion, and having at least a width equal to a thickness of the layer of the resin powder, and applying the laser beam with a second energy lower than the first energy to a center portion on an inner side of the projecting portion and the overlapping portion, and

applying the laser beam with the first energy to the modeling area ($ma_n$) in the n-th layer of the resin powder.

5. The powder bed fusion model fabrication method according to claim 4, wherein

each of the second to (n - 1)-th layers of the resin powder (8) has an outer peripheral portion ($OPA_2$, $OPA_3$, $OPA_{n-1}$) with a predetermined width, and

the step of applying a laser beam to a layer of the resin powder includes, when the projecting portion ($PA_2$, $PA_3$, $PA_{n-1}$) covers part of the outer peripheral portion, applying the laser beam with the first energy to part of the outer peripheral portion not covered by the projecting portion along with the projecting portion and the overlapping portion.

6. The powder bed fusion model fabrication method according to claim 4 or 5, wherein after the step of applying a laser beam to a layer of the resin powder, the method includes taking the n laminated solidified layers (44) out of the n layers of the resin powder (8), and isostatically pressurizing the n laminated solidified layers.

Fig.1

Fig.2

Fig.3A

Fig.3B

29

31    31a

LASER
BEAM

32

LASER
BEAM

30

31b

LIGHT SOURCE

33

DRIVER

Fig.4

Fig.5

Fig.6

ma₃

SD₃

Y

X

Fig.7

SD4

ma4

Y

X

Fig.8

Fig.9A

Fig.9B

Fig.10A

Fig.10B

Fig.11A

Fig.11B

Fig.12A

Fig.12B

35

Fig.13

Fig.14A

Fig.14B

Fig.15A

Fig.15B

Fig.16A

Fig.16B

Fig.17A

Fig.17B

Fig.18

START

S11
STORE SLICE DATA

S12
READ OUT SLICE DATA
OF FIRST LAYER

S13
APPLY LASER BEAM AT ENERGY DENSITY $E_1$
HIGHER THAN NORMAL ENERGY DENSITY $E_2$
TO ENTIRE MODELING AREA OF FIRST
(LOWERMOST) THIN LAYER

S14
READ OUT SLICE DATA OF $(n - 1)$
-TH LAYER ($n$ IS INTEGER OF 3
OR MORE)

S15
EXTRACT OUTER PERIPHERAL
PORTION OF MODELING AREA IN
SLICE DATA OF $(n - 1)$-TH LAYER

S16
DETECT PROJECTING PORTION IS
PRESENT IN MODELING AREA IN
SLICE DATA OF $(n - 1)$-TH LAYER

S17
PROJECTING PORTION
IS PRESENT?

NO → A

YES

S18
DETECT OVERLAPPING PORTION OF
MODELING AREA IN SLICE DATA OF
$(n - 1)$-TH LAYER

S19
APPLY LASER BEAM AT ENERGY
DENSITY $E_1$ TO PROJECTING PORTION
AND OVERLAPPING PORTION OF
MODELING AREA IN $(n - 1)$-TH
(INTERMEDIATE) THIN LAYER, AND
APPLY LASER BEAM AT ENERGY

B

S20
READ OUT SLICE
DATA OF $n$-TH LAYER

S21
$n$-TH LAYER
IS UPPERMOST
LAYER?

NO

YES

S22
APPLY LASER BEAM AT ENERGY
DENSITY $E_1$ TO ENTIRE MODELING
AREA OF $n$-TH (UPPERMOST)
THIN LAYER

END

Fig.19

A

$\sim$ S25

APPLY LASER BEAM AT ENERGY DENSITY $E_1$ TO OUTER PERIPHERAL PORTION OF MODELING AREA IN $(n - 1)$-TH (INTERMEDIATE) THIN LAYER, AND APPLY LASER BEAM AT ENERGY DENSITY $E_2$ TO CENTER PORTION ON INNER SIDE OF IT

B

Fig.20

MA₁

II                  II

40a

40

Y
X

Fig.21A

MA₁

40b

40a

40d           40d

40c

Z
X

Fig.21B

Fig.22

Fig.23

Fig.24

MA₂

CA₂ OA₂ PA₂

III III

40a

41

41a

42a

Y

X

Fig.25A

MA₂

PA₂ OA₂ CA₂ OA₂ PA₂

42a

41b

41d 41d

Z

41c 41a X

40a

Fig.25B

MA₃

CA₃  OA₃  PA₃

IV

IV

43a

41a

42a

42

Y

X

Fig.26A

MA₃

PA₃  OA₃  CA₃  OA₃  PA₃

43a

42b

42d

42d

42a

42c

41a

Z

X

Fig.26B

Fig.27A

Fig.27B

Fig.27C

43

MA₄

VII        VII

43a

Y

X

Fig.28A

MA₄

43a

43b

43d        43d

43c

Z

X

Fig.28B

Fig.29

Fig.30

Fig.31

OPA_{n-1}    CA_{n-1}    MA_{n-1}

48

VIII    VIII

50a

48a

49a

Y

X

Fig.32A

MA_{n-1}

OPA_{n-1}    CA_{n-1}    OPA_{n-1}    50a

48b

48d    48d

48c    48a

Z

X

49a

Fig.32B

OPA$_{n-1}$  CA$_{n-1}$  MA$_{n-1}$

51

51a

53a

52a

IX    IX

Y

X

Fig.33A

MA$_{n-1}$

OPA$_{n-1}$  CA$_{n-1}$  OPA$_{n-1}$

53a

51b

51a

51d    51d

51c

52a

Z

X

Fig.33B

OPA₄          OPA₄

PA₃                          PA₃

OPA₃ RA₃                    RA₃ OPA₃

58b

58d                                      58a

57b
57d                                      57a          54

57c
56d                                      56a
56c
55d                                      55a

55c

OPA₂ RA₂                    RA₂ OPA₂

PA₂                          PA₂

OPA₁          OPA₁

Z
X

Fig.34

| INTERNATIONAL SEARCH REPORT | | International application No. |
|---|---|---|
| | | PCT/JP2019/013161 |

**A. CLASSIFICATION OF SUBJECT MATTER**
Int.Cl. B29C64/153(2017.01)i, B33Y10/00(2015.01)i, B33Y80/00(2015.01)i

According to International Patent Classification (IPC) or to both national classification and IPC

**B. FIELDS SEARCHED**

Minimum documentation searched (classification system followed by classification symbols)
Int.Cl. B29C64/153, B33Y10/00, B33Y80/00

Documentation searched other than minimum documentation to the extent that such documents are included in the fields searched
| | |
|---|---|
| Published examined utility model applications of Japan | 1922–1996 |
| Published unexamined utility model applications of Japan | 1971–2019 |
| Registered utility model specifications of Japan | 1996–2019 |
| Published registered utility model applications of Japan | 1994–2019 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 7-57532 B2 (MATSUSHITA ELECTRIC WORKS, LTD.) 21 | 1–3 |
| A | June 1995, claim 2, fig. 3 & JP 2-111528 A | 4–6 |
| A | JP 6-270265 A (SONY CORP.) 27 September 1994, entire text (Family: none) | 1–6 |

☒ Further documents are listed in the continuation of Box C. ☐ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 18 June 2019 (18.06.2019) | 25 June 2019 (25.06.2019) |

| Name and mailing address of the ISA/ | Authorized officer |
|---|---|
| Japan Patent Office | |
| 3-4-3, Kasumigaseki, Chiyoda-ku, | |
| Tokyo 100-8915, Japan | Telephone No. |

Form PCT/ISA/210 (second sheet) (January 2015)

## INTERNATIONAL SEARCH REPORT

International application No.

PCT/JP2019/013161

C (Continuation).    DOCUMENTS CONSIDERED TO BE RELEVANT

| Category* | Citation of document, with indication, where appropriate, of the relevant passages | Relevant to claim No. |
|---|---|---|
| A | JP 2000-280359 A (3D SYSTEMS, INC.) 10 October 2000, entire text & US 6399010 B1, entire text & EP 1025982 A2 | 1-6 |

Form PCT/ISA/210 (continuation of second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2015145844 A

- JP HEI8504139 PCT